(19) Europäisches Patentamt
European Patent Office
Office européen des brevets

(11) EP 4 746 424 A1

(12) EUROPEAN PATENT APPLICATION
published in accordance with Art. 153(4) EPC

(43) Date of publication:
20.05.2026 Bulletin 2026/21

(51) International Patent Classification (IPC):
H04N 21/431 (2011.01)     H04N 21/44 (2011.01)
H04N 21/472 (2011.01)     H04N 21/8547 (2011.01)
H04N 21/426 (2011.01)

(21) Application number: 24915785.0

(52) Cooperative Patent Classification (CPC):
H04N 21/426; H04N 21/431; H04N 21/44;
H04N 21/472; H04N 21/8547

(22) Date of filing: 25.09.2024

(86) International application number:
PCT/KR2024/014542

(87) International publication number:
WO 2025/146896 (10.07.2025 Gazette 2025/28)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 02.01.2024  KR 20240000619
17.01.2024  KR 20240007702

(71) Applicant: Samsung Electronics Co., Ltd.
Suwon-si, Gyeonggi-do 16677 (KR)

(72) Inventors:
• BANG, Jiyoung
Suwon-si, Gyeonggi-do 16677 (KR)
• JEONG, Jaehyeon
Suwon-si, Gyeonggi-do 16677 (KR)
• CHOI, Keunha
Suwon-si, Gyeonggi-do 16677 (KR)

(74) Representative: HGF
HGF Limited
4th Floor, 1 City Square
Leeds LS1 2ES (GB)

(54) ELECTRONIC DEVICE AND METHOD FOR MANAGING BUFFER FOR IMAGE FRAMES, AND NON-TRANSITORY COMPUTER-READABLE RECORDING MEDIUM

(57)     This electronic device comprises at least one processor, and a memory, which includes at least one storage medium that stores a decoder, a post-processing module, a renderer and instructions, and which stores the instructions. The decoder decodes a frame from among the plurality of frames of video stored in an input buffer, so as to generate a decoded frame. The post-processing module can generate a post-processed frame by post-processing the decoded frame. The renderer can render the decoded frame or the post-processed frame stored in an output buffer. When executed by the at least one processor individually or collectively, the instructions can cause the electronic device to: configure the output buffer on the basis of the time required for the post-processing; and adjust, on the basis of the speed at which the rendered frame is played back through a display, the speed at which the plurality of frames are input into the input buffer.

FIG. 3

# Description

[TECHNICAL FIELD]

The disclosure relates to an electronic device, a method, and a non-transitory computer readable storage medium for managing a buffer for an image frame.

[BACKGROUND ART]

An electronic device may play a video. The electronic device may decode and render frames of a video to play the video. The electronic device may provide one or more post-processing functions related to the video. Such post-processing function may include hand shaking prevention on a screen, frame interpolation, scaling-up or the like.

The above information is presented as background information only to assist with an understanding of the disclosure. No determination has been made, and no assertion is made, as to whether any of the above might be applicable as prior art with regard to the disclosure.

[DETAILED DESCRIPTION OF THE INVENTION]

[TECHNICAL SOLUTION]

Provided are an electronic device, a method, and a non-transitory computer readable storage medium for managing a buffer for an image frame.

According to an aspect of the disclosure, an electronic device includes: a display, at least one processor comprising processing circuitry; and memory, comprising one or more storage mediums, a decoder, a post-processing memory, a renderer, the memory being configured to store instructions, wherein the decoder is configured to decode a frame among a plurality of frames of a video stored in an input buffer, and to generate a decoded frame, wherein the post-processing memory is configured to post-processes the decoded frame, and to generate a post-processed frame, wherein the renderer is configured to render the decoded frame or the post-processed frame stored in an output buffer, wherein the instructions, when executed by the at least one processor individually or collectively, cause the electronic device to: set the output buffer based on time required for a post-processing, and adjust a speed of inputting the plurality of frames into the input buffer based on a speed at which the rendered frame is played via the display.

According to an aspect of the disclosure, a method of an electronic device including memory comprising one or more storage mediums, a decoder, a post-processing memory, and a renderer, the method includes: by the decoder, decoding a frame stored in an input buffer among a plurality of frames of a video and generating a decoded frame, by the post-processing memory, post-processing the decoded frame, and generating a post-processed frame, and by the renderer, rendering the decoded frame or the post-processed frame stored in an output buffer, wherein the output buffer is set based on time required for a post-processing, and wherein a speed of inputting the plurality of frames into the input buffer is adjusted based on a speed at which the rendered frame is played via the display.

[BRIEF DESCRIPTION OF THE DRAWINGS]

The above and other aspects, features, and advantages of certain embodiments of the disclosure will be more apparent from the following description taken in conjunction with the accompanying drawings, in which:

FIG. 1 illustrates a block diagram about a sequence of rendering one or more frames included in an image;
FIG. 2A illustrates a timing diagram about a time point at which a post-processed frame is rendered according to a post-processing request;
FIG. 2B illustrates a timing diagram about a time point at which a post-processed frame is rendered according to a post-processing request;
FIG. 3 illustrates a block diagram of an electronic device according to an embodiment;
FIG. 4 illustrates a block diagram about a sequence in which an electronic device renders one or more frames included in an image, according to an embodiment;
FIG. 5A illustrates a diagram about a sequence of frames processed by an electronic device according to an embodiment;
FIG. 5B illustrates a diagram about a sequence of frames processed by an electronic device according to an embodiment;
FIG. 6A illustrates a diagram about a sequence of frames processed by an electronic device according to an embodiment;
FIG. 6B illustrates a diagram about a sequence of frames processed by an electronic device according to an embodiment;
FIG. 7 illustrates a diagram about a sequence of frames processed by an electronic device according to an embodiment;
FIG. 8A illustrates a block diagram about a sequence in which an electronic device renders one or more frames included in an image, according to an embodiment;
FIG. 8B illustrates a block diagram about a sequence in which an electronic device renders one or more frames included in an image, according to an embodiment;
FIG. 9 illustrates a flowchart about operations of an electronic device according to an embodiment;
FIG. 10 illustrates a flowchart about operations of an electronic device according to an embodiment;
FIG. 11 illustrates a flowchart about operations of an electronic device according to an embodiment;
FIG. 12 illustrates a flowchart about operations of an electronic device according to an embodiment;
FIG. 13 illustrates a flowchart about operations of an electronic device according to an embodiment;
FIG. 14 illustrates a flowchart about operations of an electronic device according to an embodiment;
FIG. 15 illustrates a flowchart about operations of an electronic device according to an embodiment;
FIG. 16 illustrates a flowchart about operations of an electronic device according to an embodiment;
FIG. 17 illustrates a flowchart about operations of an electronic device according to an embodiment;
FIG. 18 illustrates a flowchart about operations of an electronic device according to an embodiment; and
FIG. 19 illustrates a block diagram of an electronic device in a network environment according to one or more embodiments.

[MODE FOR CARRYING OUT THE INVENTION]

The terms as used in the disclosure are provided to merely describe specific embodiments, not intended to limit the scope of other embodiments. Singular forms include plural referents unless the context clearly dictates otherwise. The terms and words as used herein, including technical or scientific terms, may have the same meanings as generally understood by those skilled in the art. The terms as generally defined in dictionaries may be interpreted as having the same or similar meanings as or to contextual meanings of the relevant art. Unless otherwise defined, the terms should not be interpreted as ideally or excessively formal meanings. Even though a term is defined in the disclosure, the term should not be interpreted as excluding embodiments of the disclosure under circumstances.

Before undertaking the detailed description below, it may be advantageous to set forth definitions of certain words and phrases used throughout the disclosure. The term "couple" and the derivatives thereof refer to any direct or indirect communication between two or more elements, whether or not those elements are in physical contact with each other. The terms "transmit", "receive", and "communicate" as well as the derivatives thereof encompass both direct and indirect communication. The terms "include" and "comprise", and the derivatives thereof refer to inclusion without limitation. The term "or" is an inclusive term meaning "and/or". The phrase "associated with," as well as derivatives thereof, refer to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" refers to any device, system, or part thereof that controls at least one operation. The functionality associated with any particular controller may be centralized or distributed, whether locally or remotely. The phrase "at least one of," when used with a list of items, means that different combinations of one or more of the listed items may be used, and only one item in the list may be needed. For example, "at least one of A, B, and C" includes any of the following combinations: A, B, C, A and B, A and C, B and C, and A and B and C, and any variations thereof. As an additional example, the expression "at least one of a, b, or c" may indicate only a, only b, only c, both a and b, both a and c, both b and c, all of a, b, and c, or variations thereof. Similarly, the term "set" means one or more. Accordingly, the set of items may be a single item or a collection of two or more items.

Moreover, multiple functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as Read Only Memory (ROM), Random Access Memory (RAM), a hard disk drive, a Compact Disc (CD), a Digital Video Disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

As used in connection with one or more embodiments of the disclosure, the term "module" may include a unit implemented in hardware, software, or firmware, and may be interchangeably used with other terms, for example, logic, logic block, unit, part, portion or circuitry. A module may be a single integral component, or a minimum unit or part thereof, adapted to perform one or more functions. For example, according to an embodiment, the module may be implemented in a form of an application-specific integrated circuit (ASIC).

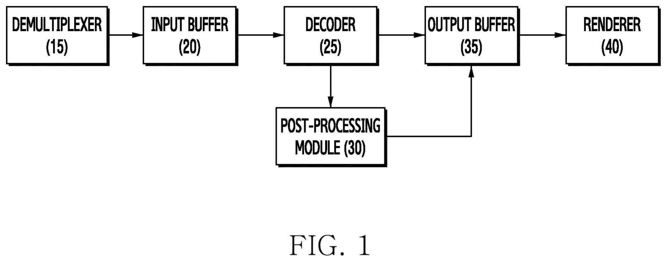

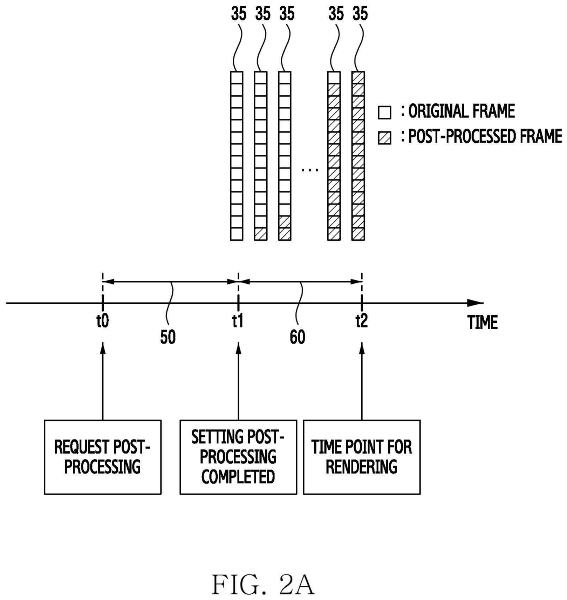

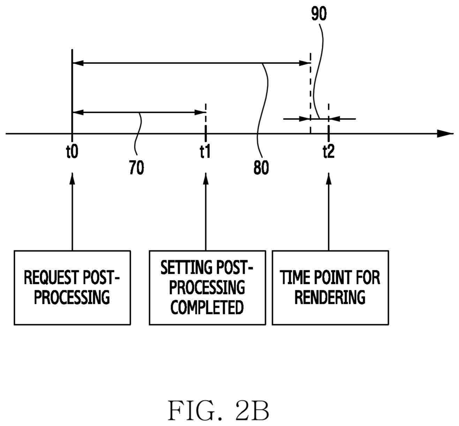

FIG. 1 illustrates a block diagram about a sequence of rendering one or more frames included in a video. FIG. 2A illustrates a timing diagram about a time point at which a post-processed frame is rendered according to a post-processing request. FIG. 2B illustrates a timing diagram about a time point at which a post-processed frame is rendered according to a post-processing request.

Referring to FIG. 1, one or more frames included in an image may be sequentially stored in an input buffer 20. In an embodiment, a demultiplexer 15 may perform de-multiplexing of a (media) file for the video. In an embodiment, the demultiplexer 15 may store in the input buffer 20 a frame to be played on a track on which the video is being played. The input buffer 20 may be accessed to a decoder 25. The decoder 25 may decode one or more frames stored in the input buffer 20.

According to an embodiment, when a post-processing is activated, the decoder 25 may transmit the decoded frame to a post-processing module 30. The post-processing module 30 may perform post-processing of the decoded frame according to a post-processing function requested.

According to an embodiment, when the post-processing is deactivated, the decoder 25 may store the decoded frame in the output buffer 35. The output buffer 35 may store a specified number of decoded frames. The output buffer 35 may be accessed to a renderer 40. The renderer 40 may render a frame stored in the output buffer 35.

When one or more frames included in the image are processed according to the above-described order, a processing speed of the decoder 25 is faster than a speed output by a display after rendering by the renderer 40. Accordingly, the entire storage space of the output buffer 35 may be filled with frames generated (or decoded) by the decoder 25.

According to the above-described order, while one or more frames included in the image are being processed (or while playing the image), a change in between activation of post-processing or deactivation of post-processing may be processed while maintaining playing of the image.

In FIG. 2A, when a post-processing is requested at a time point t0, loading (or initializing or setting) of the post-processing module 30 may be performed for a specified time interval 50. For this time interval 50, decoded frames may be rendered without post-processing. Thereafter, when loading (or initializing or setting) of the post-processing module 30 is completed at a time point t1, the post-processing module 30 may sequentially post-process frames decoded by the decoder 25. That is, when loading (or initialization or setting) of the post-processing module 30 is complete at the time point t1, the frames stored in the input buffer 20 may be decoded and post-processed. Accordingly, the post-processed frame may not be played during a time interval 60 in which all the decoded frames already stored in the output buffer 35 are played. As such, there may be a time difference between the time point t0 at which the post-processing was requested and the time point t2 at which the post-processed frame is rendered.

According to an embodiment, the post-processing may be requested for cases where conversion for post-processing (e.g., frame interpolation based on frame rate conversion (FRC), frame shaking correction, reproduction speed changing, resolution changing, image filter of frame, and/or deflicker) and/or a correction processing are requested.

In some embodiments, while one or more frames included in an image are processed (or while playing an image), a change in between an activation of post-processing or a deactivation of post-processing may be processed while ceasing playing of the image, and then, the playing may be resumed.

For example, referring to FIG. 2B, when post-processing is requested at the time point t0, playing of the image may be ceased. Further, when the post-processing is requested at the time point t0, loading (or initialization or setting) of the post-processing module 30 may be performed for a specified time interval 70. Further, when the post-processing is requested at the time point t0, seeking for a frame to be post-processed may be performed for a specified time interval 80. For example, a seeking operation for the time interval 80 may include decoding of frames required for decoding the frame requested for post-processing, and dropping (or deleting or removing) of post-processed frames not related to post-processing of the frame requested for post-processing among the decoded frames. Here, the frames required for decoding the frame requested for post-processing may include an instantaneous decoder refresh (IDR) frame (or an intra coded (I) frame), a prediction (P) frame, and/or a bi-directional prediction (B) frame. Here, the frames required for decoding of the frame requested for post-processing may be frames decoded before the frame requested for post-processing among the frames in group of pictures (GOP). Further, when the post-processing is requested at the time point t0, the decoded frames stored in the output buffer 35 may be removed (or deleted or dropped).

After the post-processing module 30 finishes loading at the time point t1, post-processing may not be performed until the seeking is finalized. After the seeking is finalized, once the frame to be post-processed is decoded, the post-processing module 30 may post-process the decoded frame during the time interval 90, and the renderer 40 may perform rendering. Accordingly, when the seeking is required, there may be a time difference between the time point t0 at which post-processing was requested and the time point t2 at which the post-processed frame is rendered. The required time for seeking to the location requested by a user may include a required time for decoding, from a previous synchronization frame (e.g., frame I), up to the frame at the location requested by the user and dropping the decoded frame. Accordingly, the time required for decoding up to the frame at the location requested by the user may vary depending upon the location of the previous synchronization frame.

Accordingly, when post-processing is activated (or deactivated) while maintaining playing of an image, as shown in FIG. 2A, a response time to the post-processing may be delayed until the time when the decoded frames previously stored in the output buffer 35 are exhausted, in addition to the time interval 50 for the post-processing. As such, there may be a timestamp difference between a frame displayed on the display when the user requested the post-processing and a frame displayed on the display after the post-processing is actually applied.

Further, when the post-processing is activated (or deactivated) while ceasing playing of the image, as shown in FIG. 2B, the playback may be ceased by the time interval 70 for post-processing, the time interval 80 for seeking, and/or the time interval 90. Accordingly, high responsiveness to post-processing and/or seamless video playback may be required.

Hereinafter, a configuration and/or an operation of an electronic device to provide high responsiveness to post-processing and/or seamless video playback will be described.

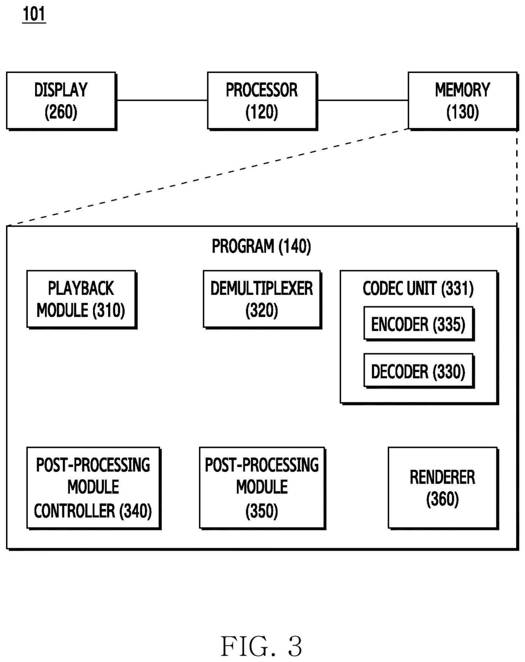

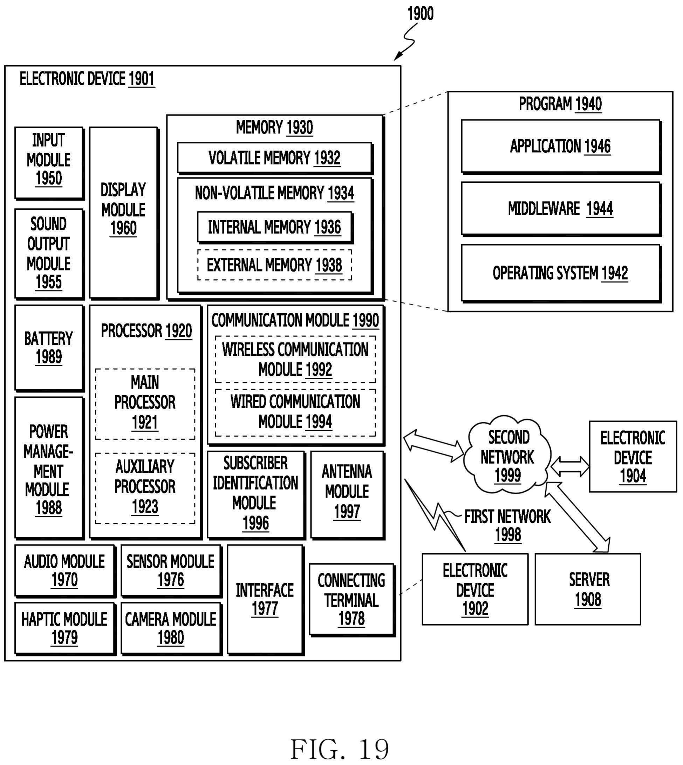

FIG. 3 illustrates a block diagram of an electronic device according to an embodiment. In an embodiment, an electronic device 101 of FIG. 3 may correspond to an electronic device 101 of FIG. 19. Referring to FIG. 3, the electronic device 101 may include a processor 120, memory 130, and a display 260.

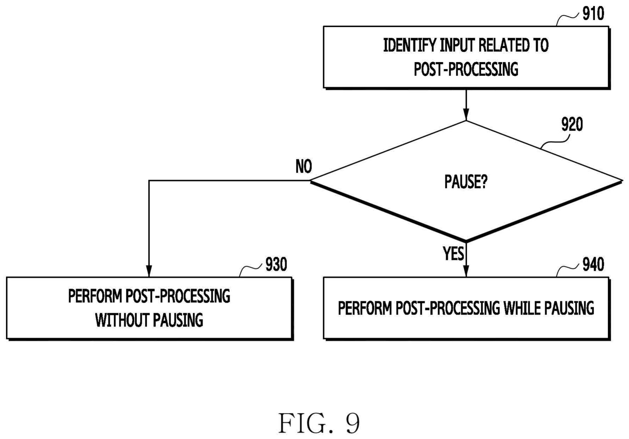

In an embodiment, the processor 120 may be used to execute the operations of the electronic device 101 illustrated in the description of FIGS. 9 to 18 to follow. For example, the processor 120 may include at least a portion of a processor 120 of FIG. 19 or may correspond to at least a portion of the processor 120 of FIG. 19. For example, the processor 120 may include one or more processors including an application processor (AP) and/or a communication processor (CP). For example, the processor 120 may be implemented as a single chip such as a system on chip (SoC) or may be implemented as multiple chips. For example, the processor 120 may be implemented as one integrated circuit or may be implemented as multiple integrated circuits. For example, the processor 120 may be arranged in a distributed manner in the electronic device 101.

In an embodiment, the memory 130 may store (at least temporarily) instructions for executing the operations of the electronic device 101 illustrated in the description of FIGS. 9 to 18 below. The instructions may be executed by the processor 120. The instructions may be included in one or more programs 140 (e.g., a playback module 310, a demultiplexer 320, a decoder 330, a post-processing module controller 340, a post-processing module 350, and a renderer 360) stored in the memory 130. For example, the memory 130 may include at least a portion (or at least a portion of a non-volatile memory 134) of the memory 130 of FIG. 19 or may correspond to at least a portion (or at least a portion of the non-volatile memory 134) of the memory 130 of FIG. 19. For example, the memory 130 may include a main memory (e.g., a random access memory (RAM)) in the electronic device 101, a register for the processor 120, a cache for the processor 120, a register for communication circuitry (e.g., a communication module 190 of FIG. 19), a buffer (or a soft buffer) for the communication circuitry (e.g., the communication module 190 of FIG. 19), and/or an auxiliary memory (e.g., a hard disk drive (HDD) or a solid state drive (SSD)) of the electronic device 101. For example, the memory 130 may be implemented as a single chip or may be implemented as multiple chips. For example, the memory 130 may be implemented as one integrated circuit or may be implemented as a plurality of integrated circuits. For example, the memory 130 may be arranged in a distributed scheme in the electronic device 101.

In an embodiment, each of the playback module 310, the demultiplexer 320, a codec unit 331, the post-processing module controller 340, the post-processing module 350, and the renderer 360 may include instructions. In an embodiment, each of the playback module 310, the demultiplexer 320, the decoder 330, the post-processing module controller 340, the post-processing module 350, and the renderer 360 may be executed by the processor 120. In an embodiment, the codec unit 331 may include the decoder 330 and an encoder 335.

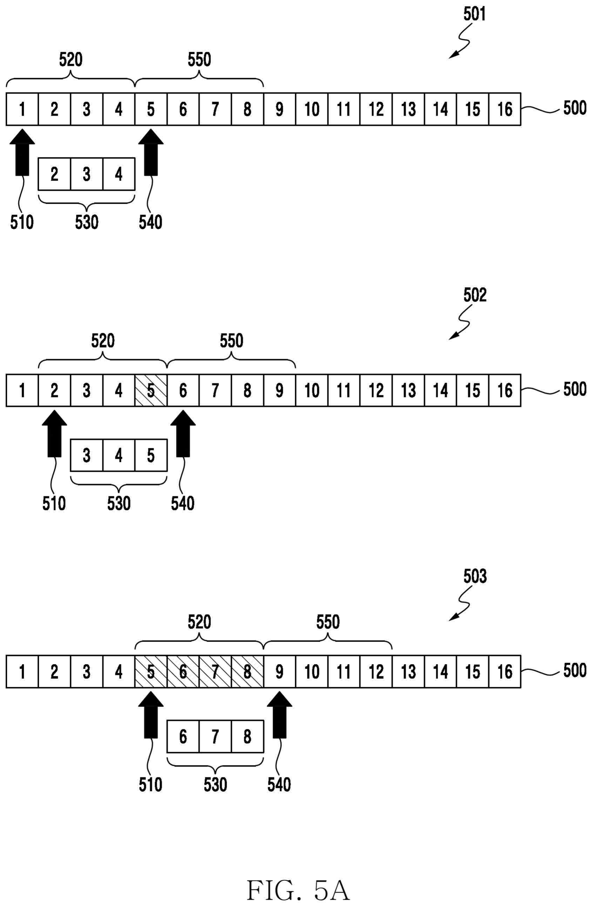

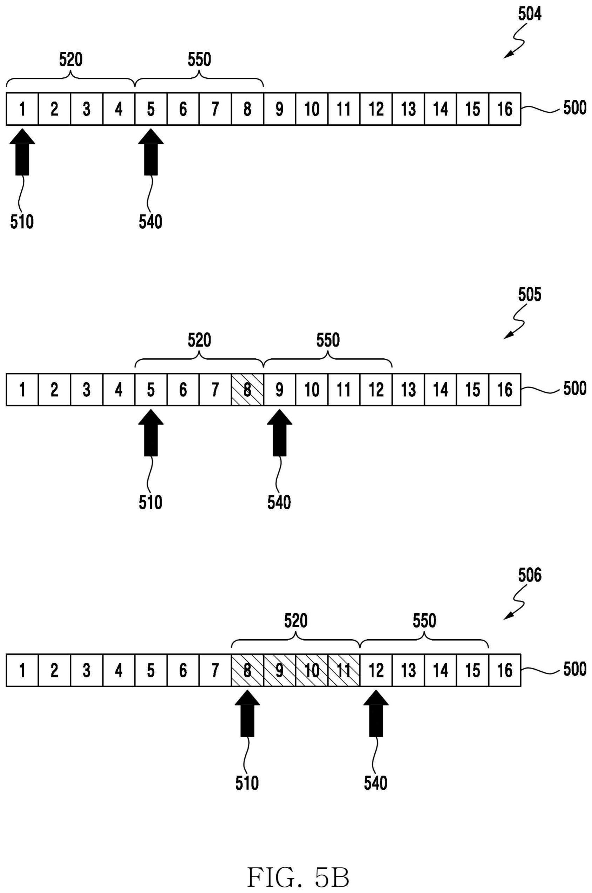

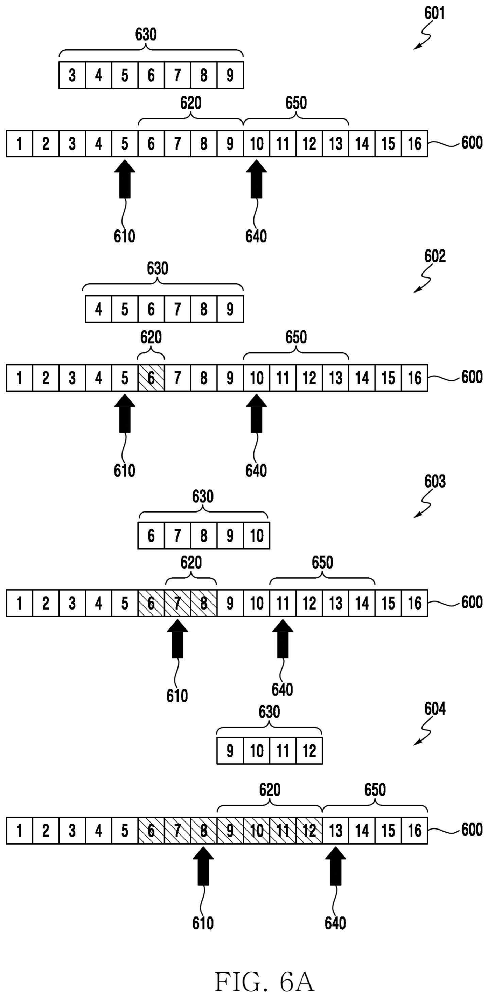

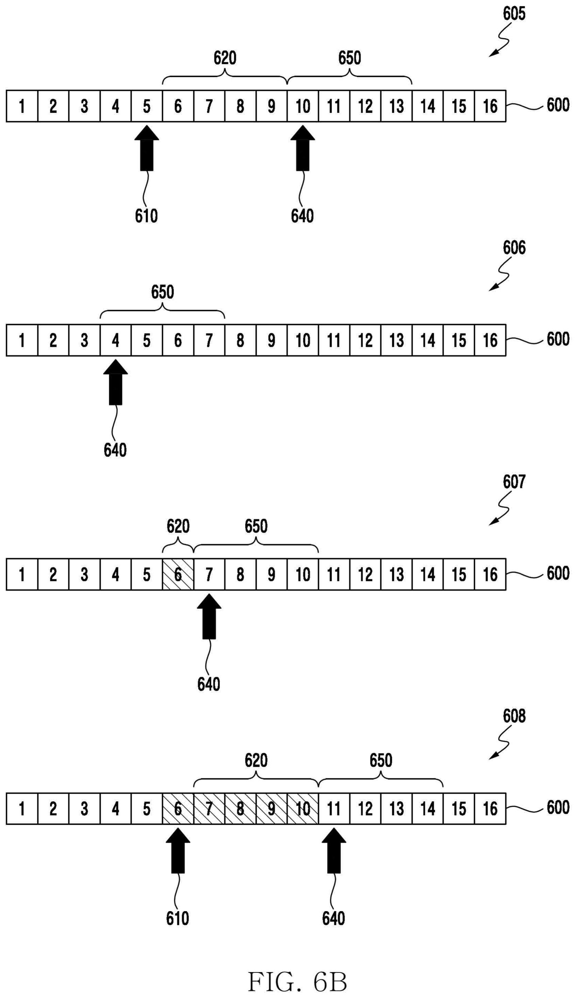

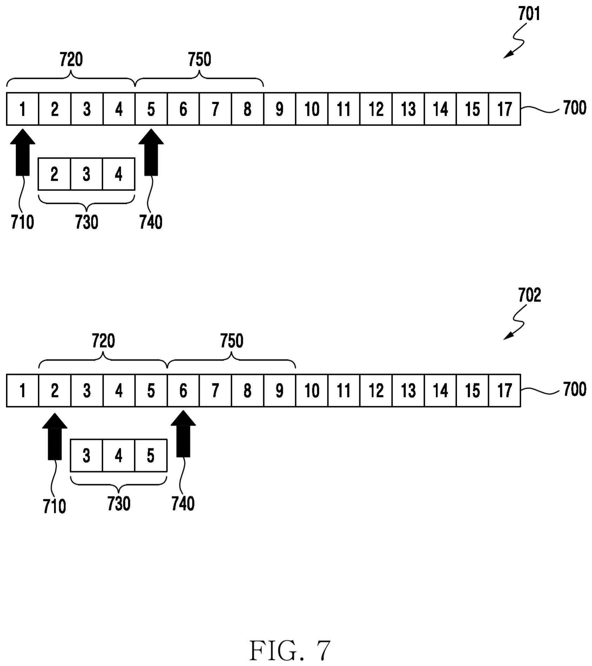

In an embodiment, the playback module 310 may control operations of the demultiplexer 320, the codec unit 331, the post-processing module controller 340, the post-processing module 350, and the renderer 360. In an embodiment, the playback module 310 may control playing of a video (or an image) by controlling the operations of the demultiplexer 320, the codec unit 331, the post-processing module controller 340, the post-processing module 350, and the renderer 360. For example, the playback module 310 may select a first path (or a path in which post-processing is deactivated) or a second path (or a path in which post-processing is activated) for a plurality of frames included in the video (or the image) to be played. For example, based on selecting the first path, the playback module 310 may control the decoder 330 and/or the renderer 360 to render the frames decoded through the decoder 330 of the codec unit 331 through the renderer 360. For example, based on selecting the second path, the playback module 310 may control the decoder 330, the post-processing module 350, and/or the renderer 360 such that the frames decoded through the decoder 330 of the codec unit 331 are post-processed through the post-processing module 350 and then rendered through the renderer 360. The first path (or a path in which post-processing is deactivated) or the second path (or a path in which post-processing is activated) may be selected (or changed) based on an input. Hereinafter, operations of changing from the first path (or the path in which post-processing is deactivated) to the second path (or the path in which post-processing is activated) will be described with reference to FIGS. 5A, 5B, 6A, and 6B. Operations of changing from the second path (or the path in which post-processing is activated) to the first path (or the path in which post-processing is deactivated) may be described with reference to FIG. 7. In an embodiment, the encoder 335 may encode an image (or frames of the image).

In an embodiment, the playback module 310 may obtain an input related to playing of a video. For example, the playback module 310 may obtain an input for playing or ceasing playing the video. For example, the playback module 310 may obtain an input for adjusting a playing speed of the video.

For example, the playback module 310 may obtain an input for applying (or activating) or disabling (or deactivating) the post-processing of the video. For example, the playback module 310 may obtain an input (or an input for seeking) for changing a playing position of the video. For example, the playback module 310 may obtain an input for setting related to processing of the video. In an embodiment, the setting related to processing of the video may be related to one or more threshold values. For example, the one or more threshold values may be values for determining whether to cease playing of the video by an input related to the playing of the video.

For example, the one or more threshold values may represent a reference threshold value (or a reference time) for a seek time. For example, the one or more threshold values may represent a reference threshold value (or a reference timestamp difference) for a timestamp difference. In an embodiment, the timestamp difference may be a difference in timestamp between a frame in which a change in a request (application) of post-processing according to an input and the most preceding frame in which the request (the application) of post-processing is changed.

In an embodiment, the playback module 310 may process an input related to playing of a video. In an embodiment, the playback module 310 may transmit the input to at least one of the demultiplexer 320, the decoder 330, the post-processing module controller 340, the post-processing module 350, or the renderer 360 so that the input related to the playing of the video is processed. For example, in the case of an input for applying or releasing post-processing of a video, the playback module 310 may transmit the input to the post-processing module controller 340 and/or the post-processing module 350. Hereinafter, operations in which the playback module 310 processes an input related to playing of a video may be described with reference to FIGS. 9 to 16.

In an embodiment, the demultiplexer 320 may perform demultiplex of a (media) file for a video. In an embodiment, the demultiplexer 320 may identify a location of a specified (image) frame in the video. In an embodiment, the demultiplexer 320 may identify a location of a specified frame (e.g., a sync frame) in a track on which the video is being played. In an embodiment, the demultiplexer 320 may extract a frame to be played from the track on which the video is being played. In an embodiment, the specified frame may be an instantaneous decoder refresh (IDR) frame. In an embodiment, the IDR frame may be decoded without referring to another frame. In an embodiment, frames between the IDR frame and the prediction (P) frame before a next IDR frame may configure one group of pictures (GOP). In an embodiment, the P frame may be decoded referring to a preceding P frame and/or IDR frame. In an embodiment, the P frame may be decoded referring to the preceding P frame and/or IDR frame in its own GOP. However, the disclosure is not limited thereto. For example, the frames of the video may include a bi-directional prediction (B) frame. In an embodiment, the B frame may be decoded referring to a subsequent P frame and/or a preceding IDR frame. In an embodiment, the B frame may be decoded referring to a subsequent B or P frame and/or the preceding IDR frame in its own GOP.

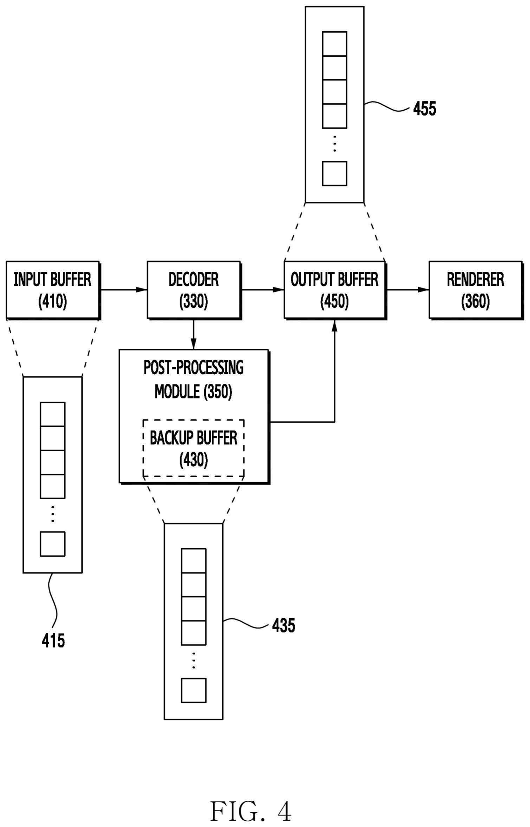

In an embodiment, the demultiplexer 320 may provide the decoder 330 with a frame to be played on a track on which the video is being played. In an embodiment, the demultiplexer 320 may store a frame to be played on the track on which the video is being played, in an input buffer (e.g., an input buffer 410 of FIG. 4) allocated to the decoder 330.

In an embodiment, the decoder 330 may decode a frame and/or audio according to a designated codec. In an embodiment, the decoder 330 may provide a frame decoded according to the designated codec to the post-processing module 350 and/or the renderer 360. In an embodiment, the decoder 330 may store the frame decoded according to the designated codec in the backup buffer 430 of FIG. 4 allocated to the post-processing module 350 and/or the output buffer (e.g., the output buffer 450 of FIG. 4) allocated to the renderer 360.

In an embodiment, the post-processing module controller 340 may load the post-processing module 350 into the memory 130 (or a volatile memory of the memory 130). In an embodiment, the post-processing module controller 340 may initialize and/or configure the post-processing module 350. In an embodiment, the configuration of the post-processing module 350 may include loading the post-processing module 350 into the memory 130 (or a volatile memory of the memory 130), based on the setting values for processing the requested post-processing. In an embodiment, the setting values may include setting values for frame interpolation according to frame rate conversion (FRC), frame shaking correction, playback speed change, resolution changing, and/or image filter of a frame. However, the disclosure is not limited thereto.

In an embodiment, the post-processing module controller 340 may manage a backup buffer (e.g., the backup buffer 430 of FIG. 4) allocated to the post-processing module 350.

In an embodiment, the post-processing module 350 may post-process the frame according to the requested post-processing function. In an embodiment, the post-processing function may include frame interpolation according to frame rate conversion (FRC), frame shaking correction, playback speed change, resolution changing, and/or image filter of frame.

In an embodiment, the decoder 330 may provide the post-processed frame to the renderer 360. In an embodiment, the decoder 330 may store the post-processed frame in the output buffer (e.g., the output buffer 450 of FIG. 4) allocated to the renderer 360. In an embodiment, the renderer 360 may render a frame stored in the output buffer (e.g., the output buffer 450 of FIG. 4).

In an embodiment, the display 260 may display visual contents. In an embodiment, the display 260 may display the rendered frame. For example, the display 260 may include at least a portion of the display module 160 of FIG. 19 or may correspond to at least a portion of the display module 160 of FIG. 19.

According to an embodiment, at least one of the playback module 310, the demultiplexer 320, the decoder 330, the post-processing module controller 340, the post-processing module 350, or the renderer 360 may be made up of hardware (e.g., a processor, an integrated circuit (IC) chip, or a graphic processing unit (GPU)). However, the disclosure is not limited thereto. At least one of the playback module 310, the demultiplexer 320, the decoder 330, the post-processing module controller 340, the post-processing module 350, or the renderer 360 may be implemented as a software module (or program), one or more hardware blocks/components, or combinations of thereof.

FIG. 4 illustrates a block diagram about a sequence in which an electronic device renders one or more frames included in an image, according to an embodiment. FIG. 3 may be referred to for the description of FIG. 4.

Referring to FIG. 4, an input buffer 410 may store a specified first number of frames 415. In an embodiment, the input buffer 410 may be accessed to a decoder 330. In an embodiment, the specified first number of frames 415 stored in the input buffer 410 may be accessed (or decoded) to the decoder 330.

In an embodiment, the first number may be changed by the playback module 310. For example, the size (or the first number) of the input buffer 410 may be changed by the playback module 310. For example, the playback module 310 may adjust the size (or the first number) of the input buffer 410 based on the decoding speed of the decoder 330 and/or the rendering speed of the renderer 360. For example, the playback module 310 may adjust the size (or the first number) of the input buffer 410 based on the playing speed (e.g., playing time magnification or playing frames per second (FPS)) of the video. However, the disclosure is not limited thereto. The change of the first number may be performed by a module other than the playback module 310. For example, the change of the first number may be performed by the post-processing module controller 340.

In an embodiment, the playback module 310 may store the first number of frames in the input buffer 410, based on the decoding speed of the decoder 330 and/or the speed at which the renderer 360 reads (or renders) the frame in the output buffer 450. For example, when the decoding speed of the decoder 330 is faster than the speed at which the renderer 360 reads (or renders) the frame in the output buffer 450, the playback module 310 may set the first number of frames stored in the input buffer 410 to be less than the third number of frames stored in the output buffer 450.

In an embodiment, the backup buffer 430 may store a specified second number of frames 435. In an embodiment, the backup buffer 430 may be accessed to the post-processing module 350. In an embodiment, the specified second number of frames 435 stored in the backup buffer 430 may be accessed (or post-processed) by the post-processing module 350. According to an embodiment, the backup buffer 430 may not be provided to the post-processing module 350. In such a circumstance, the backup buffer 430 may perform post-processing of the decoded frames obtained from the decoder 330 in the state of storing the same in the backup buffer 430.

In an embodiment, the second number may be changed by the playback module 310 and/or the post-processing module controller 340. For example, the size (or the second number) of the backup buffers 430 may be changed by the playback module 310 and/or the post-processing module controller 340. For example, the playback module 310 and/or the post-processing module controller 340 may adjust the size (or the second number) of the backup buffer 430, based on the number of frames required for the post-processing function. For example, the playback module 310 and/or the post-processing module controller 340 may adjust the size (or the second number) of the backup buffer 430, so that a smaller number of frames than the number of frames required for the post-processing function can be stored. In one embodiment, when the number of frames required for the post-processing function is four, the size (or the second number) of the backup buffer 430 may be a size in which three frames can be stored. However, the disclosure is not limited thereto. A change of the second number may be performed by a module (or, computer code) other than the playback module 310. For example, the change of the second number may be performed by the post-processing module control unit 340.

In an embodiment, the second number may be set within a size capable of allocating the size of the backup buffer 430 to the output buffer 450. In an embodiment, the second number may be set within a size of an area that is not allocated to the output buffer 450, among areas capable of allocating the size of the backup buffer 430 to the output buffer 450. However, the disclosure is not limited thereto.

In an embodiment, the output buffer 450 may store a specified third number of frames 455. In an embodiment, the output buffer 450 may be accessed to the renderer 360. In an embodiment, the specified third number of frames 455 stored in the output buffer 450 may be accessed (or rendered) to the renderer 360.

In an embodiment, the third number may be changed by the playback module 310. For example, the size (or the third number) of the output buffer 450 may be changed by the playback module 310. For example, the playback module 310 may adjust the size (or the third number) of the output buffer 450 based on a first required time for preparing the post-processing module 350. For example, the playback module 310 may adjust the size (or the third number) of the output buffer 450 based on a second required time for post-processing of the post-processing module 350. However, the disclosure is not limited thereto. The change of the third number may be performed by a module other than the playback module 310. For example, the change of the third number may be performed by the post-processing module control unit 340.

For example, the playback module 310 may adjust the size (or the third number) of the output buffer 450 based on the rendering speed of the renderer 360. For example, the playback module 310 may adjust the size (or the third number) of the output buffer 450 based on the playing speed (e.g., playing time magnification or playback FPS) of the video. For example, the playback module 310 may allocate a size as many as the number based on Equation 1 below to the output buffer 450.

$$N = (D1+D2) \times FPS \qquad \text{(Equation 1)}$$

In Equation 1, 'N' may indicate the third number. In Equation 1, 'D1' may indicate the first required time. In Equation 1, 'D2' may indicate the second required time. For example, 'D1' may include a time required according to initialization or configuration change for preparing the post-processing. For example, 'D2' may include a time required until an initial frame to which the post-processing is applied is generated. 'N' may indicate the number of frames corresponding to the minimum amount of the output buffer 450.

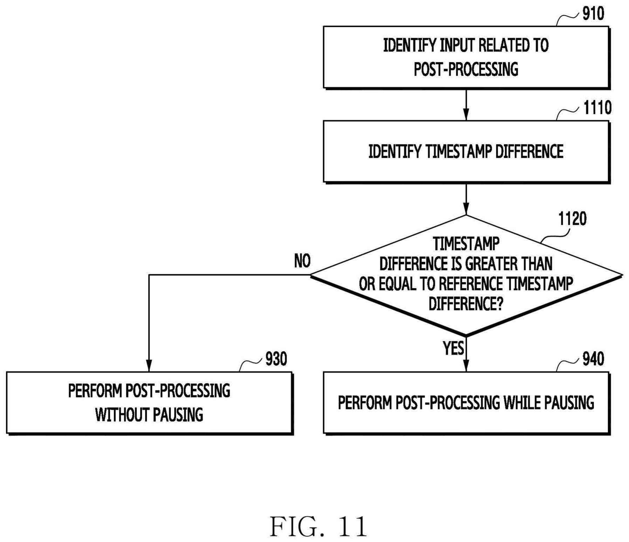

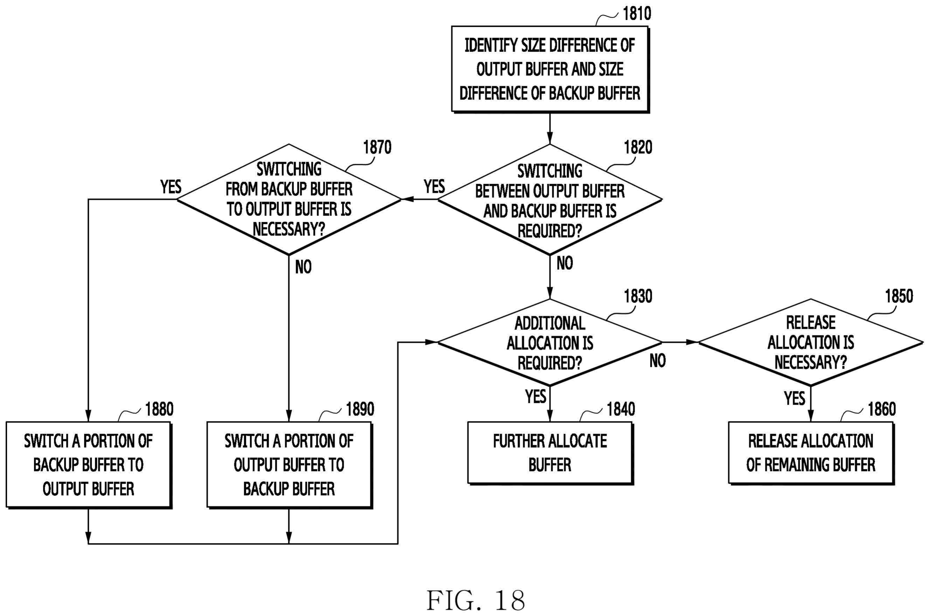

In Equation 1, 'FPS' may indicate the number of frames reproduced per second through the display 260 (or the number of frames rendered per second by the renderer 360). In an embodiment, the playback module 310 may allocate, to the output buffer 450, a value or more obtained by multiplying N by a size (or capacity) of each of the frames. Hereinafter, operations of allocating the backup buffer 430 and/or the output buffer 450 may be described with reference to FIGS. 11 and 18.

In an embodiment, the playback module 310 may select (or change) a first path (or a path in which post-processing is deactivated) or a second path (or a path in which post-processing is activated) for a plurality of frames included in a video (or an image) to be played, based on an input related to playing of the video. In an embodiment, through the first path, the frames are processed in a sequence of the input buffer 410, the decoder 330, the output buffer 450, and the renderer 360. In an embodiment, through the second path, the frames are processed in a sequence of the input buffer 410, the decoder 330, the post-processing module 350, the output buffer 450, and the renderer 360.

In an embodiment, upon changing between the first path (or the path in which the post-processing is deactivated) or the second path (or the path in which the post-processing is activated), the playback module 310 (or the post-processing module controller 340 or the processor 120 or the electronic device 101) may determine whether to cease playing the video. Hereinafter, operations performed by the playback module 310 may be performed by the post-processing module controller 340, the processor 120, and the electronic device 101.

In an embodiment, the playback module 310 may determine whether to cease playing the video, based on an input to request a change between the first path and the second path. For example, the playback module 310 may determine whether to cease playing the video, based on the post-processing function requested by the input. For example, when the post-processing function requested to change from the first path to the second path is required to be applied to the frame requested for the post-processing (e.g., frame interpolation according to frame rate conversion (FRC), an image filter of frame), the playback module 310 may determine to cease playing of the video. For example, when the post-processing function requested for changing from the first path to the second path is not required to be applied to the frame requested for the post-processing (e.g., shaking correction of frame, playback speed change, or resolution changing), the playback module 310 may determine not to cease playing the video. For example, when the FPS deteriorates below a reference FPS by the post-processing function requested for changing from the first path to the second path, the playback module 310 may determine to cease playing the video.

In an embodiment, the playback module 310 may determine whether to cease playing the video, based on one or more threshold values. For example, the one or more threshold values may represent a reference threshold value (or a reference time) for a seek time. For example, the one or more threshold values may represent a reference threshold value (or a reference timestamp difference) for a timestamp difference. In an embodiment, the timestamp difference may be between the frame in which a change in a request (application) of post-processing according to an input and the most preceding frame in which the request (application) of post-processing has been changed. According to an embodiment, the playback module 310 may select (or switch) a post-processing application scheme, based on content characteristics (e.g., an I-frame interval) and/or application characteristics (e.g., a threshold value specified for an application).

In an embodiment, when the seek time expected according to the request for the post-processing function to change from the first path to the second path is less than a reference seek time, the playback module 310 may determine to cease playing the video. In an embodiment, when the expected seek time is greater than or equal to the reference seek time, the playback module 310 may determine not to cease playing the video. In an embodiment, the expected seek time may include a time required for decoding, dropping, and/or post-processing of the frames required for post-processing the first frame for which the post-processing is requested.

In an embodiment, when the difference between the timestamp of the most preceding frame to which the post-processing function is applied according to the request for the post-processing function to change from the first path to the second path and a reference timestamp is greater than or equal to the reference timestamp difference, the playback module 310 may determine to cease playing the video. In an embodiment, when the difference between the timestamp of the most preceding frame in which the post-processing function is applied according to the request for the post-processing function to change from the first path to the second path and the reference timestamp is less than the reference timestamp difference, the playback module 310 may determine not to cease playing the video.

In an embodiment, the playback module 310 may cease playing of the video, based on determining to cease playing of the video. In an embodiment, the playback module 310 may perform post-processing (or operations for setting post-processing) while playing of the video is ceased. Hereinafter, an operation of performing post-processing while playing of the video is ceased may be described with reference to FIGS. 6A and 6B.

In an embodiment, the playback module 310 may drop (or delete or remove) the decoded frames stored in the output buffer 450 while playing of the video is ceased.

In an embodiment, the playback module 310 may load the post-processing module 350 into the memory 130 (or the volatile memory of the memory 130) while playing of the video is ceased. In an embodiment, the playback module 310 may initialize (or configure) the post-processing module 350 while playing of the video is ceased. In an embodiment, the initialization (or configuration) of the post-processing module 350 may include loading the post-processing module 350 into the memory 130 (or the volatile memory of the memory 130), based on the setting values for processing the post-processing requested. In an embodiment, the setting values may include configuration values for frame interpolation according to frame rate conversion (FRC), frame shaking correction, playback speed change, resolution changing, and/or an image filter of frame. However, the disclosure is not limited thereto. According to an embodiment, when the post-processing module 350 is already loaded, loading of the post-processing module 350 may be omitted.

In an embodiment, the playback module 310 may perform a seeking for a frame to be post-processed while playing of the video is ceased. In an embodiment, the seeking operation may include an operation of identifying a frame requested for post-processing (or a first frame requested for post-processing) indicated by an input. In an embodiment, the seeking operation may include an operation of decoding one or more frames for decoding the frame requested for post-processing (or the first frame requested for post-processing) through the decoder 330. In an embodiment, the seeking operation may include an operation of dropping (or deleting or removing) the decoded frames not related to playing (or not requested for post-processing) among the one or more frames decoded through the decoder 330. Here, the frames required for decoding the frame requested for post-processing may include an IDR frame, a P frame, and/or a B frame. Here, the frames required for decoding the frame requested for post-processing may be frames decoded before the frame requested for post-processing among the frames in the GOP. Here, the decoded frames being dropped (or deleted or removed) may include that the frames decoded by the decoder 330 are not stored in the output buffer 450.

In an embodiment, the playback module 310 may post-process the decoded frame through the post-processing module 350. In an embodiment, the playback module 310 may resume playing of the video, based on post-processing of the frame decoded through the post-processing module 350. For example, the playback module 310 may store the frame post-processed through the post-processing module 350 in the output buffer 450. For example, the playback module 310 may render the post-processed frame stored in the output buffer 450 by the post-processing module 350. For example, the playback module 310 may display the rendered frame via the display 260.

In an embodiment, the playback module 310 may perform the post-processing (or operations for setting a post-processing) during playing of the video, based on determining not to cease playing of the video. Here, the operation of performing the post-processing (or operations for setting the post-processing) while the video is played may be performed in parallel together with the operation in which the decoded frames stored in the output buffer 450 are rendered through the renderer 360, and the rendered frames are displayed through the display 260. Hereinafter, the operation of performing post-processing while the video is maintained may be described with reference to FIGS. 5A and 5B.

In an embodiment, the post-processing module controller 340 may load the post-processing module 350 into the memory 130 (or a volatile memory of the memory 130) while playing the video. In an embodiment, the post-processing module controller 340 may initialize (or configure) the post-processing module 350 while playing the video. In an embodiment, the initialization (or configuration) of the post-processing module 350 may include loading the post-processing module 350 into the memory 130 (or the volatile memory of the memory 130), based on the setting values for processing the requested post-processing. In an embodiment, the setting values may include setting values for frame interpolation according to frame rate conversion (FRC), frame shaking correction, playback speed change, resolution changing, and/or an image filter of frame. However, the disclosure is not limited thereto. According to an embodiment, when the post-processing module 350 is already loaded, loading of the post-processing module 350 may be omitted.

In an embodiment, the playback module 310 (or the post-processing module controller 340) may post-process frames that are sequentially decoded by the decoder 330 through the post-processing module 350. In an embodiment, the first post-processed frame may be rendered by the renderer 360 after all the decoded frames stored in the output buffer 450 are played. In an embodiment, the playback module 310 (or the renderer 360) may play the post-processed frame based on post-processing of the frame decoded by the post-processing module 350. For example, the playback module 310 (or the post-processing module controller 340) may store the frame post-processed through the post-processing module 350 in the output buffer 450. For example, the playback module 310 (or the renderer 360) may render the post-processed frame stored in the output buffer 450 through the decoder 330. For example, the playback module 310 (or the renderer 360) may display the rendered frame through the display 260.

As described above, the electronic device 101 can manage the size of the output buffer 450 to the minimum size required for a preparation time of the post-processing. Accordingly, in response to the post-processing request, the post-processed frames generated after the frames previously stored in the output buffer 450 are output may be output through the display 260.

Further, the electronic device 101 may determine whether to cease playback based on the type of the post-processing function, the time required for post-processing, and/or the timestamp of the first frame in which the post-processing is performed, thereby minimizing a response to the post-processing or maintaining seamless playback.

Hereinafter, an operation of performing post-processing while playing of a video is maintained will be described with reference to FIGS. 5A and 5B. FIG. 5A illustrates an operation of performing post-processing when a backup buffer 430 exists, and FIG. 5B illustrates an operation of performing post-processing when the backup buffer 430 does not exist.

FIG. 5A illustrates a diagram about a sequence of frames processed by an electronic device according to an embodiment. For the description of FIG. 5A, FIGS. 3 and 4 may be referred to.

Referring to FIG. 5A, a time point 501 may include a time point 510 at which the renderer 360 renders the frame 1 and/or a time point 540 at which the decoder 330 decodes the frame 5. In an embodiment, the time point 501 may include a time point at which frames 1 to 4 of the frames 1 to 16 of a video 500 are stored in the output buffer 520. At the time point 501, the frames 1 to 4 stored in the output buffer 520 may be frames decoded by the decoder 330. At the time point 501, the frames 2 to 4 decoded by the decoder 330 may be stored in the backup buffer 530. At the time point 501, the frames 5 to 8 may be stored in the input buffer 550 for decoding by the decoder 330.

In an embodiment, at the time point 501, the playback module 310 may obtain an input for requesting post-processing. In an embodiment, at least four decoded frames may be required for the requested post-processing. However, the disclosure is not limited thereto.

In an embodiment, the playback module 310 may request post-processing from the post-processing module 350, based on an input for requesting the post-processing. In an embodiment, the post-processing module 350 may generate the post-processed frame 5, based on the decoded frames 2 to 4 stored in the backup buffer 530 and the frame 5 newly decoded by the decoder 330. In an embodiment, the post-processing module 350 may store the post-processed frame 5 in the output buffer 520. In an embodiment, the post-processing module 350 may not store in the output buffer 520 the frames 2 to 4 that have not been post-processed. In an embodiment, the post-processing module 350 may discard the frames 2 to 4 that have not been post-processed.

Referring to FIG. 5A, a time point 502 may include a time point 510 at which the renderer 360 renders the frame 2 and/or a time point 540 at which the decoder 330 decodes the frame 5. In an embodiment, the time point 502 may include a time point at which the frames 2 to 5 of the frames 1 to 16 of the video 500 are stored in the output buffer 520. At the time point 502, the frames 2 to 4 of the frames 2 to 5 stored in the output buffer 520 may be frames decoded by the decoder 330. At the time point 502, the frame 5 of the frames 2 to 5 stored in the output buffer 520 may be a frame post-processed by the post-processing module 350. At the time point 502, the frames 3 to 5 decoded by the decoder 330 may be stored in the backup buffer 530. At time point 502, the frames 6 to 9 may be stored in the input buffer 550 for decoding by the decoder 330.

In an embodiment, the post-processing module 350 may sequentially generate post-processed frames, based on the decoded frames stored in the backup buffer 530 and the frames newly decoded by the decoder 330. In an embodiment, the post-processing module 350 may sequentially store the post-processed frame in the output buffer 520.

Referring to FIG. 5A, a time point 503 may include a time point 510 at which the renderer 360 renders the frame 5 and/or a time point 540 at which the decoder 330 decodes the frame 9. In an embodiment, the time point 503 may include a time point at which the frames 5 to 8 of the frames 1 to 16 of the video 500 are stored in the output buffer 520. At the time point 502, the frames 5 to 8 stored in the output buffer 520 may be frames post-processed by the post-processing module 350. At the time point 503, the frames 6 to 8 decoded by the decoder 330 may be stored in the backup buffer 530. At the time point 503, the frames 9 to 12 may be stored in the input buffer 550 for decoding by the decoder 330.

FIG. 5B illustrates a diagram about a sequence of frames processed by an electronic device according to an embodiment. FIGS. 3 and 4 may be referred to for the description of FIG. 5B.

Referring to FIG. 5B, a time point 504 may include a time point 510 at which the renderer 360 renders the frame 1 and/or a time point 540 at which the decoder 330 decodes the frame 5. In an embodiment, the time point 504 may include a time point at which the frames 1 to 4 of the frames 1 to 16 of the video 500 are stored in the output buffer 520. At the time point 504, the frames 1 to 4 stored in the output buffer 520 may be frames decoded by the decoder 330. At the time point 504, the frames 5 to 8 may be stored in the input buffer 550 for decoding by the decoder 330.

In an embodiment, at the time point 504, the playback module 310 may obtain an input for requesting post-processing. In an embodiment, at least four decoded frames may be required for the requested post-processing. However, the disclosure is not limited thereto.

In an embodiment, the playback module 310 may request post-processing from the post-processing module 350, based on an input for requesting the post-processing. In an embodiment, the post-processing module 350 may generate the post-processed frame 8 based on the frames 5 to 8 newly decoded by the decoder 330. In an embodiment, the post-processing module 350 may store the post-processed frame 8 in the output buffer 520.

Referring to FIG. 5B, a time point 505 may include a time point 510 at which the renderer 360 renders the frame 5 and/or a time point 540 at which the decoder 330 decodes the frame 9. In an embodiment, the time point 505 may include a time point at which the frames 5 to 8 of the frames 1 to 16 of the video 500 are stored in the output buffer 520. At the time point 505, the frames 5 to 7 of the frames 5 to 8 stored in the output buffer 520 may be frames decoded by the decoder 330. At the time point 505, the frame 8 of the frames 5 to 8 stored in the output buffer 520 may be a frame post-processed by the post-processing module 350. At the time point 505, the frames 9 to 12 may be stored in the input buffer 550 for decoding by the decoder 330.

Referring to FIG. 5B, a time point 506 may include a time point 510 at which the renderer 360 renders the frame 8 and/or a time point 540 at which the decoder 330 decodes the frame 12. In an embodiment, the time point 506 may include a time point at which the frames 8 to 11 of the frames 1 to 16 of the video 500 are stored in the output buffer 520. At the time point 505, the frames 8 to 11 stored in the output buffer 520 may be frames post-processed by the post-processing module 350. At the time point 506, the frames 12 to 15 may be stored in the input buffer 550 for decoding by the decoder 330.

As described above with reference to FIGS. 5A and 5B, the electronic device 101 may play the post-processed frame at a faster time by managing the size of the output buffer 450 to the minimum size required for a preparation time of the post-processing time. Further, as described with reference to FIG. 5A as an example, the electronic device 101 may store (or manage) the decoded frame in the backup buffer 430 to react more quickly to the post-processing request, thereby playing back the post-processed frame in a shorter time.

Hereinafter, an operation of performing post-processing while playing of a video is ceased will be described with reference to FIGS. 6A and 6B. FIG. 6A illustrates an operation of performing the post-processing in case where the backup buffer 430 exists, and FIG. 6B illustrates an operation of performing the post-processing in case where no backup buffer 430 exists.

FIG. 6A illustrates a diagram about a sequence of frames processed by an electronic device according to an embodiment. FIGS. 3 and 4 may be referred to for the description of FIG. 6A.

Referring to FIG. 6A, a time point 601 may include a time point 610 at which the renderer 360 renders the frame 5 and/or a time point 640 at which the decoder 330 decodes the frame 10. In an embodiment, the time point 601 may include a time point at which the frames 6 to 9 of the frames 1 to 16 of the video 600 are stored in the output buffer 620. At the time point 601, the frames 6 to 9 stored in the output buffer 620 may be frames decoded by the decoder 330. At the time point 601, the frames 3 to 9 decoded by the decoder 330 may be stored in the backup buffer 630. At the time point 601, the frames 10 to 13 may be stored in the input buffer 650 for decoding by the decoder 330.

Compared to FIG. 5A, the backup buffer 530 of FIG. 6A may be in a state of further storing the output frame 5 and the frames 1 to 4 before the output frame. In an embodiment, the number of frames 1 to 4 before the output frame may correspond to the number of frames required for post-processing.

In an embodiment, at the time point 601, the playback module 310 may obtain an input for requesting post-processing upon playback of the frame 5. In an embodiment, at least four decoded frames may be required for the requested post-processing. However, the disclosure is not limited thereto.

In an embodiment, the playback module 310 may cease playing of the video, based on an input for requesting the post-processing. In an embodiment, the playback module 310 may identify the frame 6 to be post-processed and the frames (e.g., frames 3 to 6) required for decoding the frame 6 to be post-processed. In an embodiment, the playback module 310 may post-process the frame 6 through the frames 3 to 6 by the post-processing module 350.

Referring to FIG. 6A, at a time point 602, the renderer 360 may cease rendering the frame. In an embodiment, at the time point 602, based on that rendering of the frame is ceased (or based that playing of the video is ceased), the playback module 310 may delete (or discard or remove) the decoded frames 6 to 9 stored in the output buffer 620.

In an embodiment, at the time point 602, the playback module 310 may delete (or discard or remove) some frames (e.g., the frame 3) of the decoded frames 3 to 9 stored in the backup buffer 630, based on generation of the post-processed frame 6 (or based on the post-processed frame 6 being stored in the output buffer 620). For example, some of the decoded frames stored in the backup buffer 630, to be deleted, may be decoded frames that are no longer required for post-processing.

In an embodiment, at a time point 602, the playback module 310 may generate the post-processed frame 6, based on the decoded frames 3 to 6 stored in the backup buffer 430. For example, the post-processing module 350 may post-process the frame 6 based on the decoded frames 3 to 6 stored in the backup buffer 430, and may store the post-processed frame 6 in the output buffer 620.

Referring to FIG. 6A, a time point 603 may include a time point 610 at which the renderer 360 renders the post-processed frame 7 and/or a time point 640 at which the decoder 330 decodes the frame 11. In an embodiment, the time point 603 may include a time point at which the frames 7 and 8 of the frames 1 to 16 of the video 600 are stored in the output buffer 620. At the time point 602, the frames 7 and 8 stored in the output buffer 620 may be frames post-processed by the post-processing module 350. At the time point 603, the frames 6 to 10 decoded by the decoder 330 may be stored in the backup buffer 630. At the time point 603, among the decoded frames 4 to 9 stored in the backup buffer 630 at the previous time point 602, the frames 4 and 5 that are no longer required for post-processing may be deleted (or discarded or removed) from the backup buffer 630. At the time point 603, the frames 11 to 14 may be stored in the input buffer 650 for decoding by the decoder 330.

Referring to FIG. 6A, a time point 604 may include a time point 610 at which the renderer 360 renders the post-processed frame 8 and/or a time point 640 at which the decoder 330 decodes the frame 13. In an embodiment, the time point 604 may include a time point at which the frames 9 to 12 of the frames 1 to 16 of the video 600 are stored in the output buffer 620. At the time point 602, the frames 9 to 12 stored in the output buffer 620 may be frames post-processed by the post-processing module 350. At the time point 604, the frames 9 to 12 decoded by the decoder 330 may be stored in the backup buffer 630. At the time point 604, the frame 9 that is no longer required for post-processing among the decoded frames 6 to 10 stored in the backup buffer 630 at the previous time point 602 may be deleted (or discarded or removed) from the backup buffer 630. At the time point 604, the frames 13 to 16 may be stored in the input buffer 650 for decoding by the decoder 330.

Referring to FIG. 6A, the speed at which the frame post-processed by the renderer 360 is rendered in the output buffer 620 may be faster than the speed at which the frame processed by the decoder 330 (and the post-processing module 350) in the input buffer 650 is stored in the output buffer 620. Accordingly, in order to optimize the size of the output buffer 620, the size of the backup buffer 630 may be gradually reduced. However, the disclosure is not limited thereto.

FIG. 6B illustrates a diagram about a sequence of frames processed by an electronic device according to an embodiment. For the description of FIG. 6B, FIGS. 3 and 4 may be referred to.

Referring to FIG. 6B, a time point 605 may include a time point 610 at which the renderer 360 renders the frame 4 and/or a time point 640 at which the decoder 330 decodes the frame 10. In an embodiment, the time point 604 may be a time point at which the frames 6 to 9 of the frames 1 to 16 of the video 600 are stored in the output buffer 620. At the time point 605, the frames 6 to 9 stored in the output buffer 620 may be frames decoded by the decoder 330. At the time point 605, the frames 10 to 13 may be stored in the input buffer 650 for decoding by the decoder 330.

In an embodiment, at the time point 605, the playback module 310 may obtain an input for requesting post-processing while playing (or rendering) the frame 5. In an embodiment, at least four decoded frames may be required for the requested post-processing. However, the disclosure is not limited thereto.

In an embodiment, the playback module 310 may cease playing the video, based on an input for requesting post-processing obtained while playing (or rendering) the frame 5. In an embodiment, the playback module 310 (or the decoder 330) may again decode the frames 3 to 6 required for post-processing the frame 6, in order to post-process the frame 6 following the frame 5 and then play the frame 6. Further, the playback module 310 may drop (or delete or remove) the decoded frames 6 to 9 stored in the output buffer 620 that is no longer played.

Referring to FIG. 6B, at a time point 606, the playback module 310 may identify the frame 6 to be post-processed and frames (e.g., frames 3 to 6) required for decoding the frame 6 to be post-processed, while playing of the video is ceased. In an embodiment, the playback module 310 may decode the frame 6 to be post-processed and frames (e.g., the frames 3 to 6) required for decoding the frame 6 to be post-processed, through the decoder 330.

In an embodiment, the playback module 310 may drop (or delete or remove) the decoded frames 3 to 5 that are not related to playback (or not requested for post-processing) among one or more frames 3 to 6 decoded through the decoder 330. Here, dropping (or deleting or removing) of the decoded frames 3 to 5 may include that the frames 3 to 5 decoded by the decoder 330 are not stored in the output buffer 620.

Referring to FIG. 6B, at a time point 607, the playback module 310 may generate a post-processed frame 6, based on the frames 3 to 6 newly decoded by the decoder 330. In an embodiment, the post-processing module 350 may store the post-processed frame 6 generated, based on the newly decoded frames 3 to 6, in the output buffer 620.

Referring to FIG. 6B, a time point 608 may include a time point 610 at which the renderer 360 renders the post-processed frame 6 and/or a time point 640 at which the decoder 330 decodes the frame 11. In an embodiment, the time point 608 may include a time point at which the frames 7 to 10 among the frames 1 to 16 of the video 600 are stored in the output buffer 620. At the time point 608, the frames 7 to 10 stored in the output buffer 620 may be frames post-processed by the post-processing module 350. At the time point 608, the frames 11 to 14 may be stored in the input buffer 650 for decoding by the decoder 330.

As described above with reference to FIGS. 6A and 6B as an example, the electronic device 101 may reproduce the post-processed frame at a faster time by managing the size of the output buffer 450 to the minimum size required for a preparation time of the post-processing. Further, as described with reference to FIG. 6A as an example, the electronic device 101 may store (or manage) the decoded frame in the backup buffer 430, so as to respond to the post-processing request more quickly (e.g., without repeated decoding of the decoded frame 4 previously stored in the backup buffer 430), thereby reproducing the post-processed frame at a faster time.

FIG. 7 illustrates a diagram about a sequence of frames processed by an electronic device according to an embodiment. For the description of FIG. 7, FIGS. 3 and 4 may be referred to.

Referring to FIG. 7, a time point 701 may include a time point 710 at which the renderer 360 renders the post-processed frame 1 and/or a time point 740 at which the decoder 330 decodes the frame 5. In an embodiment, the time point 701 may include a time point at which the frames 1 to 4 of the frames 1 to 16 of the video 700 are stored in the output buffer 720. At the time point 701, the frames 1 to 4 stored in the output buffer 720 may be frames post-processed by the post-processing module 350. At the time point 701, the frames 2 to 4 decoded by the decoder 330 may be stored in the backup buffer 730. At the time point 701, the frames 5 to 8 may be stored in the input buffer 750 for decoding by the decoder 330.

In an embodiment, at the time point 701, the playback module 310 may obtain an input for requesting release of post-processing (or deactivation of post-processing). In an embodiment, the playback module 310 may cease playing of the video, based on the input for requesting release of the post-processing (or deactivation of the post-processing). In an embodiment, the playback module 310 may drop (or delete or remove) the post-processed frames 1 to 4 stored in the output buffer 720, based on the input for requesting release of the post-processing (or deactivation of the post-processing). In an embodiment, the playback module 310 may store in the output buffer 720 the decoded frames 2 to 4 stored in the backup buffer 730, based on the input for requesting release of the post-processing (or deactivation of post-processing).

Referring to FIG. 7, a time point 702 may include a time point 710 at which the renderer 360 renders the decoded frame 2 and/or a time point 740 at which the decoder 330 decodes the frame 6. In an embodiment, the time point 702 may include a time point at which the frames 2 to 5 of the frames 1 to 16 of the video 700 are stored in the output buffer 720. At the time point 702, the frames 2 to 4 of the frames 2 to 5 stored in the output buffer 720 may be frames previously stored in the backup buffer 730. At the time point 702, the frame 5 of the frames 2 to 5 stored in the output buffer 720 may be a frame newly decoded by the decoder 330 after the input for requesting release of the post-processing (or deactivation of post-processing).

As described above with reference to FIG. 7 as an example, the electronic device 101 may reproduce a decoded frame other than a post-processed frame in a shorter time, by managing the size of the output buffer 450 to the minimum size required to release the post-processing. Further, the electronic device 101 may store (or manage) the decoded frame in the backup buffer 430, so as to respond to a request for releasing the post-processing more quickly (e.g., storing in the output buffer 720 the decoded frames 2 to 4 pre-stored in the backup buffer 430), thereby reproducing the decoded frame in a faster time.

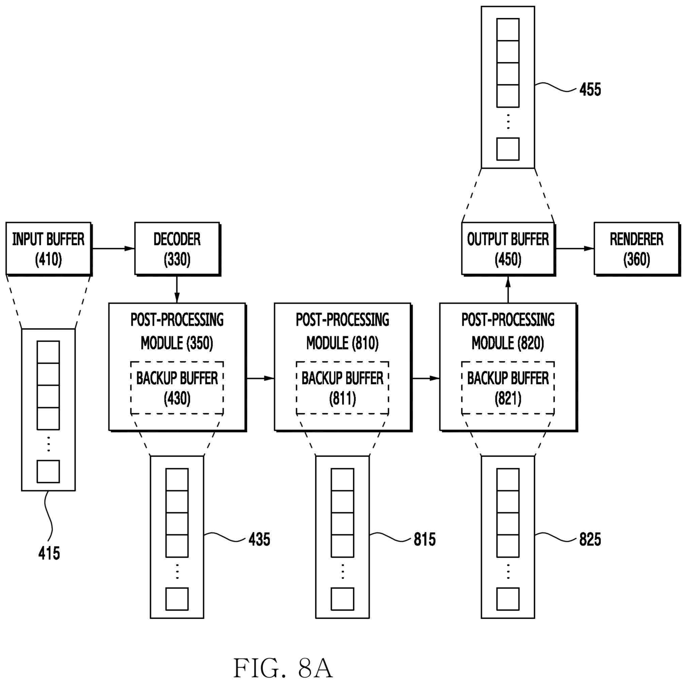

FIG. 8A illustrates a block diagram about a sequence in which an electronic device renders one or more frames included in an image, according to an embodiment. For the description of FIG. 8A, FIGS. 3 and 4 may be referred to.

In an embodiment, the playback module 310 may select (or change) one of paths for playing a plurality of frames included in a video (or an image), based on an input related to playing of the video. In an embodiment, the paths for playing the plurality of frames may be different from each other depending on a selective application of the post-processing functions according to a plurality of post-processing modules 350, 810, and 820. For example, the post-processing module 350 may perform a frame interpolation according to frame rate conversion (FRC), the post-processing module 810 may perform a resolution changing, and the post-processing module 820 may apply an image filter.

The size of the backup buffers 430, 811, and 821 of each of the plurality of post-processing modules 350, 810, and 820 may be adjusted according to a required post-processing function. The size of the backup buffers 430, 811, and 821 may be set based on the number of frames required for the post-processing function. The backup buffers 430, 811, and 821 may have different sizes depending upon post-processing functions. For example, when the number of frames required for the post-processing function processed by the post-processing module 350 is four, the size (or the second number) of the backup buffer 430 may be a size in which three frames can be stored. For example, when the number of frames required for the post-processing function processed by the post-processing module 810 is three, the size (or the second number) of the backup buffer 811 may be a size in which two frames can be stored. For example, when the number of frames required for the post-processing function processed by the post-processing module 820 is five, the size (or the second number) of the backup buffer 821 may be a size in which four frames can be stored.

For example, as shown in FIG. 8A, all the post-processing modules 350, 810, and 820 may be used to reproduce a plurality of frames included in a video (or an image). In such case, the path may be a path through which the frames are processed in a sequence of the input buffer 410, the decoder 330, the post-processing modules 350, 810, and 820, the output buffer 450, and the renderer 360.

Referring to FIG. 8A, the backup buffer 430 of the post-processing module 350 may store an output (e.g., a decoded frame) of the decoder 330. The backup buffer 811 of the post-processing module 810 may store an output (e.g., a post-processed frame) of the post-processing module 350. The backup buffer 821 of the post-processing module 820 may store an output (e.g., a post-processed frame) of the post-processing module 810. In an embodiment, the output buffer 450 may store an output (e.g., a post-processed frame) of the post-processing module 820.

For example, all of the post-processing modules 350, 810, and 820 may not be used to reproduce a plurality of frames included in a video (or an image). In such a circumstance, the path may be a path through which the frames are processed in a sequence of the input buffer 410, the decoder 330, the output buffer 450, and the renderer 360. In this case, the output buffer 450 may store an output (e.g., a decoded frame) of the decoder 330.

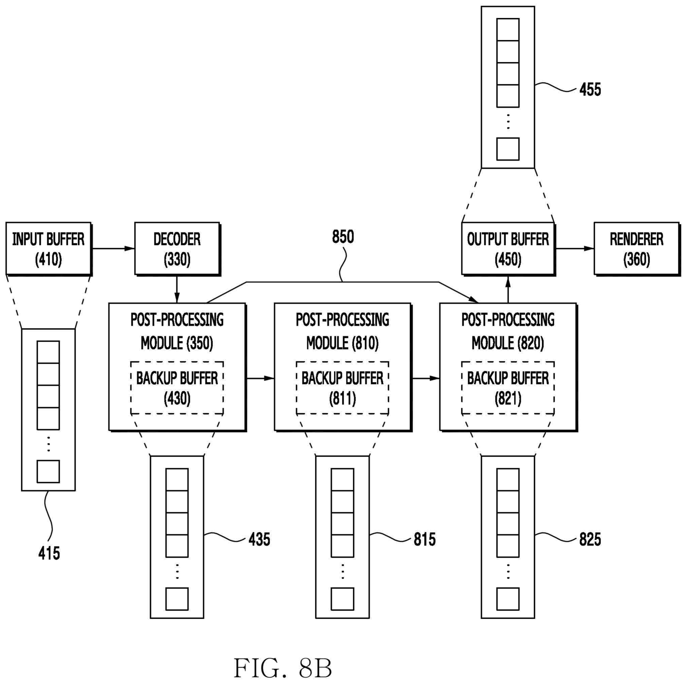

For example, as shown in FIG. 8B, some of the post-processing modules 350, 810, and 820 may be used to reproduce a plurality of frames included in a video (or image). In such a case, the path 850 may be a path through which the frames are processed in a sequence of the input buffer 410, the decoder 330, some of the post-processing modules 350, 810, and 820 (e.g., the post-processing module 350, the post-processing module 820), the output buffer 450, and the renderer 360.

Referring to FIG. 8B, the backup buffer 430 of the post-processing module 350 may store an output (e.g., a decoded frame) of the decoder 330. For the path 850, the backup buffer 821 of the post-processing module 820 may store an output (e.g., a post-processed frame) of the post-processing module 350. In an embodiment, the output buffer 450 may store an output (e.g., a post-processed frame) of the post-processing module 820.

As described above, the electronic device 101 may include a plurality of post-processing modules 350, 810, and 820 according to a post-processing function. Further, the device 101 may respond more quickly to an input to request activation or deactivation of the post-processing function, using the backup buffers 430, 811, and 821 of some of the plurality of post-processing modules 350, 810, and 820 according to the selected post-processing function.

FIG. 9 illustrates a flowchart about operations of an electronic device according to an embodiment. For the description of FIG. 9, FIGS. 3, 4, 5A, 5B, 6A, 6B, 7, 8A, and 8B may be referred to.

Operations of FIG. 9 may be performed by the electronic device 101. Operations of FIG. 9 may be performed by the electronic device 101, by executing instructions stored in the memory 130 by the processor 120 of the electronic device 101.

Referring to FIG. 9, in operation 910, the electronic device 101 may identify an input related to post-processing. In an embodiment, the electronic device 101 may obtain an input related to post-processing while playing a video. In an embodiment, the electronic device 101 may obtain the input related to the post-processing through an application for playing a video. In an embodiment, the input related to the post-processing may include an input for requesting activation of at least one of one or more post-processing related functions or an input for requesting deactivation of at least one of one or more post-processing related functions. The one or more post-processing related functions may include frame interpolation based on frame rate conversion (FRC), frame shaking correction, playback speed changing, resolution changing, and/or an image filter of frame.

In operation 920, the electronic device 101 may determine whether it is necessary to pause video playback. In an embodiment, the electronic device 101 may determine whether it is necessary to pause video playback for post-processing.

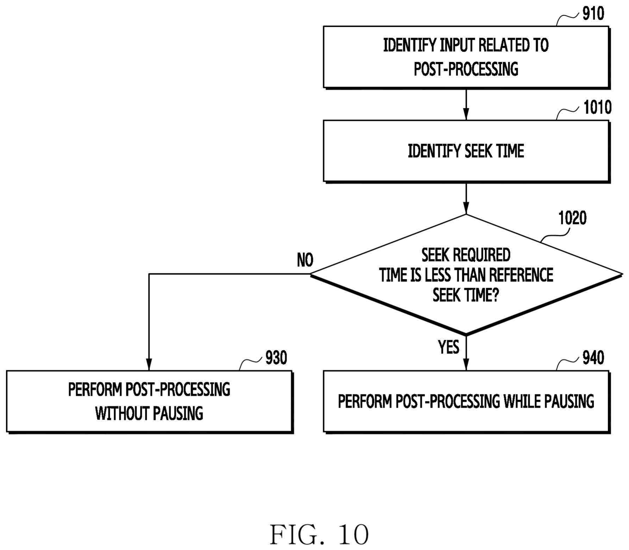

In an embodiment, the electronic device 101 may determine whether a pause of video playback is necessary, based on a time to generate a frame in which whether to apply the post-processing is changed (hereinafter, referred to as generation time). In an embodiment, the generation time may include a time for seeking a frame to be post-processed, a time for decoding of the sought frame, and/or a time for initializing (or configuring or loading) the post-processing. Hereinafter, an operation of determining whether it is necessary to pause the video playback, based on the generation time, will be described with reference to FIG. 10, FIG. 11, FIG. 13, or FIG. 14.

In operation 920, the electronic device 101 may perform operation 930 based on determining that it is not necessary to pause the video playback. In operation 920, based on determining that it is necessary to pause the video playback, the electronic device 101 may perform operation 940.

In operation 930, the electronic device 101 may perform post-processing without pausing. In an embodiment, the electronic device 101 may perform at least one operation for the post-processing, while playing a video without pausing.

In an embodiment, the electronic device 101 may load the post-processing module 350 into the memory 130 (or the volatile memory of the memory 130) while playing the video. In an embodiment, the electronic device 101 may post-process frames that are sequentially decoded by the decoder 330, while playing the video. In an embodiment, the first post-processed frame may be rendered by the renderer 360 after all the decoded frames stored in the output buffer 450 are played back. In an embodiment, the electronic device 101 may playback the post-processed frame based on post-processing of the decoded frame after the input. According to an embodiment, when the post-processing module 350 is already loaded, loading of the post-processing module 350 may be omitted.

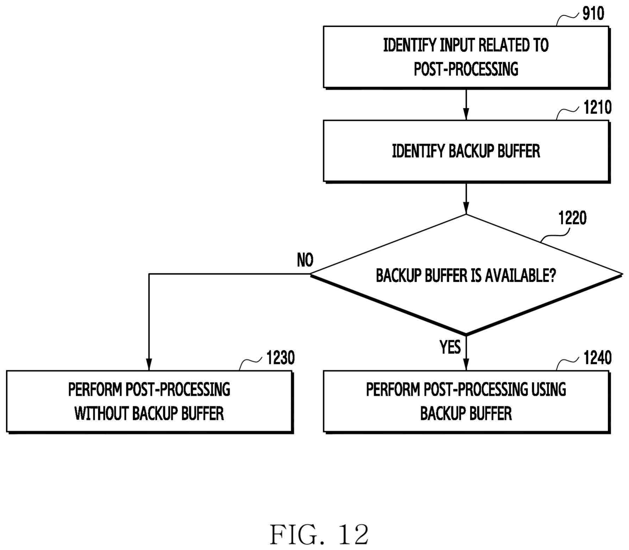

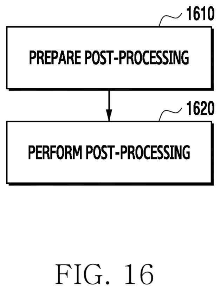

In an embodiment, when the backup buffer 430 is available, the electronic device 101 may perform post-processing using the decoded frames stored in the backup buffer 430, while playing the video. In an embodiment, when the backup buffer 430 is not available, the electronic device 101 may perform post-processing using the frames newly decoded after the input related to post-processing, while playing the video. Hereinafter, an operation of performing the post-processing without pausing may be described with reference to FIG. 16. Hereinafter, an operation of performing the post-processing according to whether the backup buffer 430 is used or not may be described with reference to FIG. 12.

In operation 940, the electronic device 101 may perform post-processing while pausing. In an embodiment, the electronic device 101 may perform at least one operation for post-processing during pausing.

In an embodiment, the electronic device 101 may drop (or delete or remove) the decoded frames stored in the output buffer 450, while playing of the video is ceased. In an embodiment, the electronic device 101 may load the post-processing module 350 in the memory 130 (or the volatile memory of the memory 130), while playing of the video is ceased. In an embodiment, while playing of the video is ceased, the electronic device 101 may perform a seek for a frame to be post-processed. In an embodiment, the electronic device 101 may post-process the sought frame decoded. In an embodiment, the electronic device 101 may resume playing of the video, based on post-processing of the sought frame decoded. According to an embodiment, when the post-processing module 350 is already loaded, loading of the post-processing module 350 may be omitted.

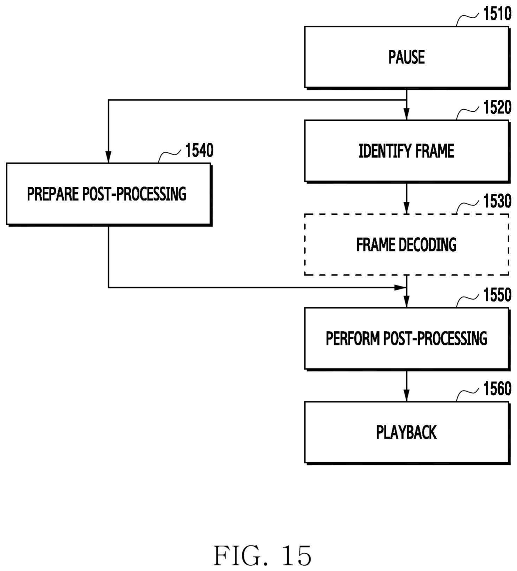

In an embodiment, when the backup buffer 430 is available, the electronic device 101 may perform post-processing using the decoded frames stored in the backup buffer 430, while playing of the video is ceased. In an embodiment, when the backup buffer 430 is not available, the electronic device 101 may perform post-processing using the frames newly decoded after the input related to post-processing, while playing of the video is ceased. Hereinafter, an operation of performing the post-processing during pausing may be described with reference to FIG. 15. Hereinafter, an operation of performing the post-processing according to whether the backup buffer 430 is used or not may be described with reference to FIG. 12.

FIG. 10 illustrates a flowchart about operations of an electronic device according to an embodiment. For the description of FIG. 10, FIG. 3, FIG. 4, FIG. 5A, FIG. 5B, FIG. 6A, FIG. 6B, FIG. 7, FIG. 8A, and FIG. 8B may be referred to.

Operations of FIG. 10 may be performed by the electronic device 101. Operations of FIG. 10 may be performed by the electronic device 101, by the processor 120 of the electronic device 101 executing instructions stored in the memory 130.

Operations 910, 930, and 940 of FIG. 10 may correspond to operations 910, 930, and 940 of FIG. 9. Operations 1010 and 1020 of FIG. 10 may include operation 920 of FIG. 9.

Referring to FIG. 10, in operation 910, the electronic device 101 may identify an input related to post-processing. In an embodiment, the electronic device 101 may obtain the input related to post-processing through an application for playing of a video.

In operation 1010, the electronic device 101 may identify a seek time. In an embodiment, the seek time may include a time required for decoding, dropping, and/or post-processing of the frames required for post-processing the first frame for which post-processing is requested.

In operation 1020, the electronic device 101 may determine whether the seek time is less than a reference seek time. In an embodiment, the reference seek time may be preset. For example, the reference seek time may be preset for a video. For example, the reference seek time may be preset for an application that plays a video.

In operation 1020, the electronic device 101 may perform operation 930 based on determining that the seek time is equal to or greater than the reference seek time. In operation 1020, based on determining that the seek time is less than the reference seek time, the electronic device 101 may perform operation 940.

In operation 930, the electronic device 101 may perform post-processing without pausing. In an embodiment, the electronic device 101 may perform at least one operation for post-processing, while playing the video without pausing.

In operation 940, the electronic device 101 may perform post-processing while pausing. In an embodiment, the electronic device 101 may perform at least one operation for post-processing while pausing.

FIG. 11 illustrates a flowchart about operations of an electronic device according to an embodiment. For the description of FIG. 11, FIG. 3, FIG. 4, FIG. 5A, FIG. 5B, FIG. 6A, FIG. 6B, FIG. 7, FIG. 8A, and FIG. 8B may be referred to.

Operations of FIG. 11 may be performed by the electronic device 101. Operations of FIG. 11 may be performed by the electronic device 101 by executing instructions stored in the memory 130 by the processor 120 of the electronic device 101.

Operations 910, 930, and 940 of FIG. 11 may correspond to operations 910, 930, and 940 of FIG. 9. Operations 1110 and 1120 of FIG. 11 may include operation 920 of FIG. 9.

Referring to FIG. 11, in operation 910, the electronic device 101 may identify an input related to post-processing. In an embodiment, the electronic device 101 may obtain the input related to post-processing through an application for playing a video.

In operation 1110, the electronic device 101 may identify a timestamp difference. In an embodiment, the timestamp difference may be between the frame for which the request for the post-processing is changed according to an input and the most preceding frame to which the post-processing is applied.

In operation 1120, the electronic device 101 may identify whether the timestamp difference is greater than or equal to a reference timestamp difference. In an embodiment, the timestamp difference may be preset. For example, the timestamp difference may be preset for the video. For example, the timestamp difference may be preset for an application that plays a video.

In operation 1120, based on determining that the timestamp difference is less than the reference timestamp difference, the electronic device 101 may perform operation 930. In operation 1120, based on determining that the timestamp difference is equal to or greater than the reference timestamp difference, the electronic device 101 may perform operation 940.

In operation 930, the electronic device 101 may perform post-processing without pausing. In an embodiment, the electronic device 101 may perform at least one operation for post-processing, while playing a video without pausing.

In operation 940, the electronic device 101 may perform post-processing while pausing. In an embodiment, the electronic device 101 may perform at least one operation for post-processing during pausing.

FIG. 12 illustrates a flowchart about operations of an electronic device according to an embodiment. For the description of FIG. 12, FIG. 3, FIG. 4, FIG. 5A, FIG. 5B, FIG. 6A, FIG. 6B, FIG. 7, FIG. 8A, and FIG. 8B may be referred to.

Operations of FIG. 12 may be performed by the electronic device 101. Operations of FIG. 12 may be performed by the electronic device 101, by executing instructions stored in the memory 130 by the processor 120 of the electronic device 101.

Operation 910 of FIG. 12 may correspond to operation 910 of FIG. 9. Operations 1210 and 1220 of FIG. 12 may be performed independently of operation 920 of FIG. 9. For example, operations 1210 and 1220 of FIG. 12 may be performed sequentially or in parallel with respect to operation 920 of FIG. 9. Operations 1230 and 1240 of FIG. 12 may be performed independently of each of operation 930 or operation 940 of FIG. 9. For example, operations 1230 and 1240 of FIG. 12 may be performed sequentially or in parallel with respect to each of operation 930 or 940 of FIG. 9. For example, operation 1230 or operation 1240 of FIG. 12 may be performed sequentially or in parallel with respect to operation 930 of FIG. 9. For example, operation 1230 or operation 1240 of FIG. 12 may be performed sequentially or in parallel with respect to operation 940 of FIG. 9.

Referring to FIG. 12, in operation 910, the electronic device 101 may identify an input related to post-processing. In an embodiment, the electronic device 101 may obtain the input related to post-processing through an application for playing a video.

In operation 1210, the electronic device 101 may identify the backup buffer 430. In an embodiment, the electronic device 101 may identify the backup buffer 430 allocated to the post-processing module 350.

In operation 1220, the electronic device 101 may determine whether the backup buffer 430 is available. In an embodiment, the availability of the backup buffer 430 may include the backup buffer 430 being allocated to the post-processing module 350. In an embodiment, the availability of the backup buffer 430 may include the decoded frames being stored in the backup buffer 430 allocated to the post-processing module 350. However, the disclosure is not limited thereto.

In operation 1220, based on determining that the backup buffer 430 is not available, the electronic device 101 may perform operation 1230. In operation 1220, based on determining that the backup buffer 430 is available, the electronic device 101 may perform operation 1240.

In operation 1230, the electronic device 101 may perform post-processing without a backup buffer. For example, the electronic device 101 may generate a post-processed frame, based on the frames decoded after an input related to post-processing is input.

For example, the electronic device 101 may perform post-processing without a backup buffer, while the video is being played. For example, the electronic device 101 may perform post-processing without a backup buffer, while playing of the video is ceased.

In operation 1240, the electronic device 101 may perform post-processing using a backup buffer. For example, the electronic device 101 may generate a post-processed frame, based on decoded frames stored in the backup buffer 430 before an input related to post-processing is input.

For example, the electronic device 101 may perform post-processing using a backup buffer, while the video is being played. For example, the electronic device 101 may perform post-processing using a backup buffer, while playing of the video is ceased.

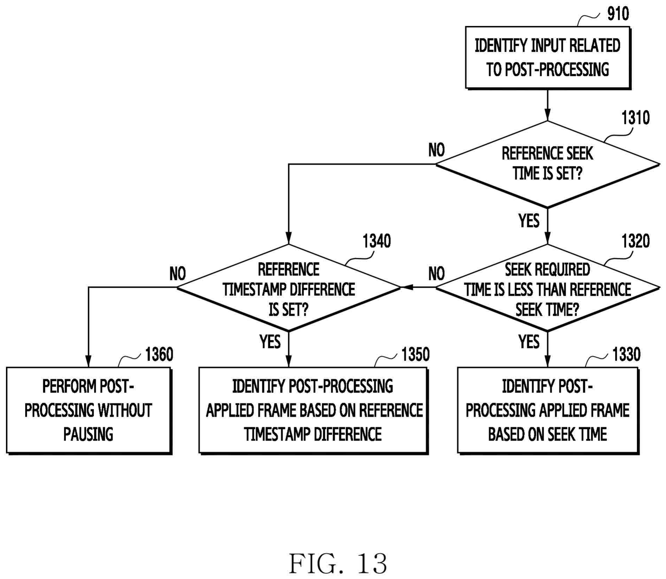

FIG. 13 illustrates a flowchart about operations of an electronic device according to an embodiment. For the description of FIG. 13, FIG. 3, FIG. 4, FIG. 5A, FIG. 5B, FIG. 6A, FIG. 6B, FIG. 7, FIG. 8A, and FIG. 8B may be referred to.

Operations of FIG. 13 may be performed by the electronic device 101. Operations of FIG. 13 may be performed by the electronic device 101, by executing instructions stored in the memory 130 by the processor 120 of the electronic device 101.

Operation 910 of FIG. 13 may correspond to operation 910 of FIG. 9. Operations 1310 to 1360 of FIG. 13 may correspond to operations 920, 930, or 940 of FIG. 9.

Referring to FIG. 13, in operation 910, the electronic device 101 may identify an input related to post-processing. In an embodiment, the electronic device 101 may obtain the input related to post-processing through an application for playing a video.

In operation 1310, the electronic device 101 may determine whether a reference seek time is set. In an embodiment, the reference seek time may be preset. For example, the reference seek time may be preset for the video. For example, the reference seek time may be preset for an application that plays a video.

In operation 1320, the electronic device 101 may determine whether the seek time is less than the reference seek time. In an embodiment, the seek time may include a time required for decoding, dropping, and/or post-processing the frames required for post-processing the first frame for which post-processing is requested.

In operation 1320, based on determining that the seek time is less than the reference seek time, the electronic device 101 may perform operation 1330. In operation 1320, based on determining that the seek time is equal to or greater than the reference seek time, the electronic device 101 may perform operation 1340.

In operation 1330, the electronic device 101 may identify a post-processing applied frame based on the seek time. In an embodiment, the electronic device 101 may identify the post-processing applied frame within the seek time. In an embodiment, the electronic device 101 may identify the post-processing applied frame within the seek time without pausing. In an embodiment, the post-processing applied frame may include a first frame requested by an input related to the post-processing and its subsequent frames.

In operation 1340, the electronic device 101 may determine whether a reference timestamp difference is set. In an embodiment, the timestamp difference may be between a frame for which the request for the post-processing is changed according to an input and the most preceding frame to which the post-processing is applied.

In operation 1340, based on determining that the reference timestamp difference is set, the electronic device 101 may perform operation 1350. In operation 1340, based on determining that the reference timestamp difference is not set, the electronic device 101 may perform operation 1360.

In operation 1350, the electronic device 101 may identify a post-processing applied frame based on the reference timestamp difference. The electronic device 101 may identify the post-processing applied frame, based on comparing the timestamp difference with the reference timestamp difference. For example, when the timestamp difference is less than the reference timestamp difference, the electronic device 101 may perform post-processing without pausing. In an embodiment, when the timestamp difference is equal to or greater than the reference timestamp difference, the electronic device 101 may perform at least one operation for post-processing during pausing.

In operation 1360, the electronic device 101 may perform post-processing without pausing.

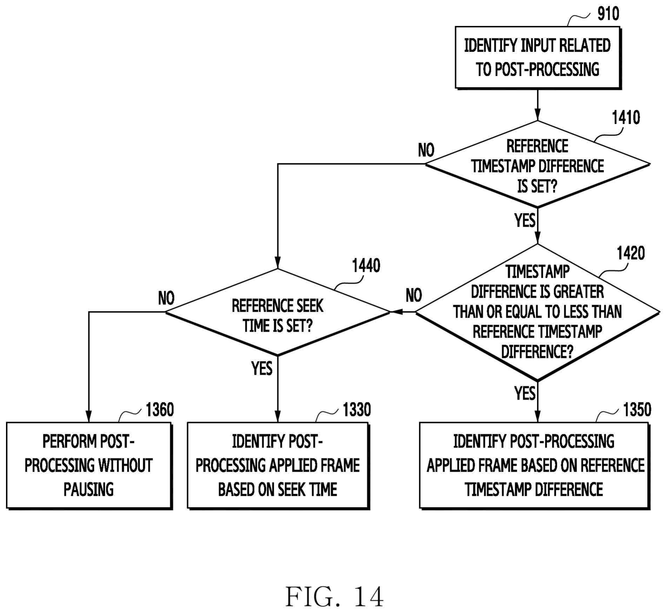

FIG. 14 illustrates a flowchart about operations of an electronic device according to an embodiment. For the description of FIG. 14, FIG. 3, FIG. 4, FIG. 5A, FIG. 5B, FIG. 6A, FIG. 6B, FIG. 7, FIG. 8A, and FIG. 8B may be referred.

Operations of FIG. 14 may be performed by the electronic device 101. Operations of FIG. 14 may be performed by the electronic device 101, by executing instructions stored in the memory 130 by the processor 120 of the electronic device 101.

Operation 910 of FIG. 14 may correspond to operation 910 of FIG. 9. Operations 1330, 1350, 1360, 1410, 1420, or 1440 of FIG. 14 may correspond to operations 920, 930, or 940 of FIG. 9. Operations 1330, 1350, and 1360 of FIG. 14 may correspond to operations 1330, 1350, and 1360 of FIG. 13.

Referring to FIG. 14, in operation 910, the electronic device 101 may identify an input related to post-processing. In an embodiment, the electronic device 101 may obtain the input related to post-processing through an application for playing a video.

In operation 1410, the electronic device 101 may determine whether a reference timestamp difference is set. In an embodiment, the timestamp difference may be preset. For example, the timestamp difference may be preset for a video. For example, the timestamp difference may be preset for an application that plays the video.

In operation 1420, the electronic device 101 may determine whether the timestamp difference is greater than or equal to the reference timestamp difference. In an embodiment, the timestamp difference may be between a frame for which the request for the post-processing is changed according to an input and the most preceding frame to which the post-processing is applied.

In operation 1440, the electronic device 101 may determine whether the reference seek time is set. In an embodiment, the reference seek time may be preset. For example, the reference seek time may be preset for the video. For example, the reference seek time may be preset for an application that plays the video.

In operation 1440, the electronic device 101 may perform operation 1330 based on determining that the reference seek time is set. In operation 1440, based on determining that the reference seek time is not set, the electronic device 101 may perform operation 1360.

In operation 1330, the electronic device 101 may identify a post-processing applied frame based on the seek time. The electronic device 101 may identify the post-processing applied frame, based on comparing the seek time with a reference seek time. For example, when the seek time is less than the reference seek time, the electronic device 101 may perform the post-processing without pausing. In an embodiment, when the seek time is equal to or greater than the reference seek time, the electronic device 101 may perform at least one operation for post-processing during pausing.

In operation 1350, the electronic device 101 may identify the post-processing applied frame based on the reference timestamp difference. In an embodiment, the electronic device 101 may identify the post-processing applied frame within the reference timestamp difference. In an embodiment, the electronic device 101 may identify the post-processing applied frame within the reference timestamp difference without pausing. In an embodiment, the post-processing applied frame may include a first frame requested by an input related to the post-processing and its subsequent frames.

In operation 1360, the electronic device 101 may perform post-processing without pausing.

FIG. 15 illustrates a flowchart about operations of an electronic device according to an embodiment. For the description of FIG. 15, FIGS. 3, 4, 5A, 5B, 6A, 6B, 7, 8A, and 8B may be referred to.

Operations of FIG. 15 may be performed by the electronic device 101. Operations of FIG. 15 may be performed by the electronic device 101, by executing instructions stored in the memory 130 by the processor 120 of the electronic device 101. Operations of FIG. 15 may correspond to operation 940 of FIG. 9.

Referring to FIG. 15, in operation 1510, the electronic device 101 may pause playing of a video. In an embodiment, the electronic device 101 may drop (or delete or remove) the decoded frames stored in the output buffer 450, while playing of the video is ceased.

In operation 1520, the electronic device 101 may identify a frame. The electronic device 101 may include an operation of identifying a frame requested for post-processing (or the first frame requested for post-processing) indicated by an input.

In operation 1530, the electronic device 101 may decode a frame. The electronic device 101 may decode one or more frames for decoding the frame requested for post-processing (or the first frame requested for post-processing) through the decoder 330. Here, the frames required for decoding the frame requested for post-processing may include an IDR frame, a P frame, and/or a B frame. Here, the frames required for decoding the frame requested for post-processing may be frames decoded before the frame requested for post-processing among the frames in the GOP. According to an embodiment, when the frame requested for post-processing (or the first frame requested for post-processing) is stored in the backup buffer 430, decoding of the frame requested for post-processing (or the first frame requested for post-processing) may be omitted.

In an embodiment, the operations 1520 and 1530 and the operation 1540 may be performed in parallel.

In operation 1540, the electronic device 101 may prepare post-processing. In an embodiment, the electronic device 101 may load the post-processing module 350 into the memory 130 (or the volatile memory of the memory 130), while playing of the video is ceased.

In operation 1550, the electronic device 101 may perform post-processing. The electronic device 101 may perform the post-processing on the frame requested for post-processing (or the first frame requested for post-processing).

In an embodiment, the electronic device 101 may store the post-processed frame in the output buffer 450 via the post-processing module 350.

In operation 1560, the electronic device 101 may playback a video. In an embodiment, the electronic device 101 may render the post-processed frame stored in the output buffer 450. For example, the electronic device 101 may display the rendered frame through the display 260.

FIG. 16 illustrates a flowchart about operations of an electronic device according to an embodiment. For the description of FIG. 16, FIG. 3, FIG. 4, FIG. 5A, FIG. 5B, FIG. 6A, FIG. 6B, FIG. 7, FIG. 8A, and FIG. 8B may be referred to.

Operations of FIG. 16 may be performed by the electronic device 101. Operations of FIG. 16 may be performed by the electronic device 101, by executing instructions stored in the memory 130 by the processor 120 of the electronic device 101.

Operations of FIG. 16 may correspond to operation 930 of FIG. 9. Referring to FIG. 16, in operation 1610, the electronic device 101 may prepare post-processing. In an embodiment, the electronic device 101 may load the post-processing module 350 into the memory 130 (or the volatile memory of the memory 130), while playing the video.

In operation 1620, the electronic device 101 may perform post-processing. The electronic device 101 may perform the post-processing on the frame requested for post-processing (or the first frame requested for post-processing).

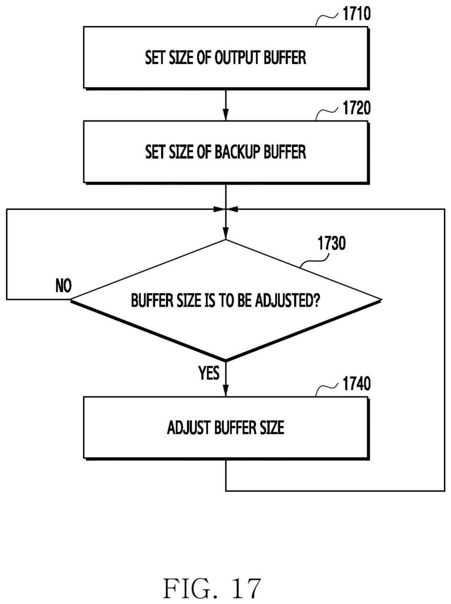

FIG. 17 illustrates a flowchart about operations of an electronic device according to an embodiment. For the description of FIG. 17, FIGS. 3, 4, 5A, 5B, 6A, 6B, 7, 8A, and 8B may be referred to.

Operations of FIG. 17 may be performed by the electronic device 101. Operations of FIG. 17 may be performed by the electronic device 101, by executing instructions stored in the memory 130 by the processor 120 of the electronic device 101.

Referring to FIG. 17, in operation 1710, the electronic device 101 may set the size of the output buffer 450. In an embodiment, the electronic device 101 may set the size of the output buffer 450 based on being requested for playing of the video. In an embodiment, the electronic device 101 may set the size of the output buffer 450, based on information (e.g., resolution or FPS) for playing of a video. In an embodiment, the electronic device 101 may set the size of the output buffer 450, based on an initial setting value for playing of a video.

For example, the electronic device 101 may set the size (or the third number) of the output buffer 450, based on a first required time for preparing of the post-processing module 350. For example, the electronic device 101 may set the size (or the third number) of the output buffer 450 based on a second required time for post-processing of the post-processing module 350. For example, the electronic device 101 may set the size (or the third number) of the output buffer 450 based on a rendering speed of the renderer 360. For example, the electronic device 101 may set the size (or the third number) of the output buffer 450 based on the playback speed (e.g., playback time magnification or playback FPS) of the video.

In operation 1720, the electronic device 101 may set the size of the backup buffer 430. In an embodiment, the electronic device 101 may set the size of the backup buffer 430 based on being requested for playing of the video. In an embodiment, the electronic device 101 may set the size of the backup buffer 430 within a size allocable to the output buffer 450. In an embodiment, the electronic device 101 may set the size of the backup buffer 430 within the size of an area that is not allocated to the output buffer 450 of an entire area capable of being allocated to the output buffer 450. However, the disclosure is not limited thereto.

In an embodiment, the electronic device 101 may set the size (or the second number) of the backup buffer 430 based on the number of frames required for the post-processing function. For example, the playback module 310 and/or the post-processing module controller 340 may adjust the size (or the second number) of the backup buffer 430 such that a smaller number of frames than the number of frames required for the post-processing function (or as many as the number of frames required for the post-processing function) can be stored. When the number of frames required for the post-processing function is four, the size (or the second number) of the backup buffer 430 may be a size in which three frames can be stored.

In an embodiment, the electronic device 101 may set the size of the output buffer 450, based on information (e.g., resolution, FPS) for playing the video. In an embodiment, the electronic device 101 may set the size of the output buffer 450, based on an initial setting value for playing the video.

In operation 1730, the electronic device 101 may determine whether it is required to adjust the buffer size. For example, the electronic device 101 may determine whether it is necessary to adjust the size of the backup buffer 430 and/or the output buffer 450.

For example, the electronic device 101 may determine whether it is necessary to adjust the buffer size according to a change in the playback speed (e.g., playback time magnification or playback FPS) of the video. For example, when the playback speed of the video increases, the number of frames played within the first required time for preparing of the post-processing module 350 and the second required time for post-processing of the post-processing module 350 increases, and thus the electronic device 101 may determine that the buffer size needs to be adjusted. For example, when the playback speed of the video decreases, the number of frames played within the first required time for preparing of the post-processing module 350 and the second required time for post-processing of the post-processing module 350 decreases, and thus the electronic device 101 may determine that the buffer size needs to be adjusted.

For example, the electronic device 101 may determine whether it is necessary to adjust the backup buffer 430 based on activation or deactivation of the post-processing. For example, as the number of decoded frames required by the post-processing function increases, the electronic device 101 may determine that the backup buffer 430 needs to be adjusted. For example, as the number of decoded frames required by the post-processing function decreases, the electronic device 101 may determine that the backup buffer 430 needs to be adjusted.

In operation 1730, the electronic device 101 may perform operation 1740 based on determining that the buffer size needs to be adjusted. In operation 1730, based on determining that it is not necessary to adjust the buffer size, the electronic device 101 may again perform operation 1730.

In operation 1740, the electronic device 101 may adjust the buffer size. For example, the electronic device 101 may adjust the buffer size of the output buffer 450, based on a change in the playback speed (e.g., playback time magnification or playback FPS) of the video. For example, the electronic device 101 may adjust the size of the backup buffer 430, based on activation or deactivation of the post-processing. Detailed operations of the operation 1740 may be described with reference to FIG. 18.

FIG. 18 illustrates a flowchart about operations of an electronic device according to an embodiment. FIG. 3. For description of FIG. 18, FIG. 4, FIG. 5A, FIG. 5B, FIG. 6A, FIG. 6B, FIG. 7, FIG. 8A, and FIG. 8B may be referred to.

Operations of FIG. 18 may be performed by the electronic device 101. Operations of FIG. 18 may be performed by the electronic device 101, by executing instructions stored in the memory 130 by the processor 120 of the electronic device 101. The operations of FIG. 18 may correspond to operation 1740 of FIG. 17. Referring to FIG. 18, in operation 1810, the electronic device 101 may identify a size difference of the output buffer 450 and a size difference of the backup buffer 430.

For example, the electronic device 101 may identify a first size difference between a preset first size of the output buffer 450 (or the number of output buffers 450 before adjustment) and a second size required for the output buffer 450 (or the number of output buffers 450 after adjustment). For example, the second size required for the output buffer 450 may be a size required for the output buffer 450 according to a change in the playback speed (e.g., playback time magnification or playback FPS) of the video. For example, the second size required for the output buffer 450 may be a size required for the output buffer 450, as the number of frames reproduced within the first required time for preparing of the post-processing module 350 and the second required time for post-processing of the post-processing module 350 is changed.

For example, the electronic device 101 may identify a second size difference between a third size (or the number of backup buffers 430 before adjustment) of the backup buffer 430 before activation or deactivation of the post-processing and a fourth size (or the number of backup buffers 430 after adjustment) required for the backup buffer 430 after activation or deactivation of the post-processing. The fourth size required for the backup buffer 430 after activation or deactivation of the post-processing may be a size required for the backup buffer 430, as the number of decoded frames required by the post-processing function is changed.

In operation 1820, the electronic device 101 may determine whether switching between the output buffer 450 and the backup buffer 430 is required. For example, the electronic device 101 may determine whether switching between the output buffer 450 and the backup buffer 430 is required, based on the first size difference and/or the second size difference. For example, when it is required to reduce the size of the output buffer 450 and to increase the size of the backup buffer 430, the electronic device 101 may determine that switching between the output buffer 450 and the backup buffer 430 is required. For example, when it is required to increase the size of the output buffer 450 and to decrease the size of the backup buffer 430, the electronic device 101 may determine that switching between the output buffer 450 and the backup buffer 430 is required. For example, when it is required to increase the size of the output buffer 450 and the backup buffer 430, the electronic device 101 may then determine that switching between the output buffer 450 and the backup buffer 430 is not required. For example, when it is required to reduce the size of the output buffer 450 and the backup buffer 430, the electronic device 101 may then determine that switching between the output buffer 450 and the backup buffer 430 is not required.

In operation 1820, based on determining that switching between the output buffer 450 and the backup buffer 430 is not required, the electronic device 101 may perform operation 1830. In operation 1820, based on determining that switching between the output buffer 450 and the backup buffer 430 is required, the electronic device 101 may perform operation 1870.

In operation 1830, the electronic device 101 may determine whether additional allocation is required. For example, when it is required to increase the size of the output buffer 450 and the backup buffer 430, the electronic device 101 may determine that additional allocation to the output buffer 450 and/or the backup buffer 430 is required. For example, when it is required to reduce the size of the output buffer 450 and the backup buffer 430, the electronic device 101 may determine that additional allocation to the output buffer 450 and/or the backup buffer 430 is not required.

In operation 1830, based on determining that additional allocation is required, the electronic device 101 may perform operation 1840. In operation 1830, based on determining that no additional allocation is required, the electronic device 101 may perform operation 1850.

In operation 1840, the electronic device 101 may further allocate a buffer. For example, the electronic device 101 may add a buffer to buffers that require additional allocation. For example, the electronic device 101 may further allocate a buffer within the first size difference or the second size difference to at least one of the output buffer 450 or the backup buffer 430.

In operation 1850, the electronic device 101 may determine whether it is necessary to release allocation. For example, when it is required to reduce the size of the output buffer 450 and the backup buffer 430, the electronic device 101 may determine that it is necessary to release allocation on the output buffer 450 and/or the backup buffer 430. For example, when it is not required to reduce and increase the size of the output buffer 450 and the backup buffer 430, the electronic device 101 may determine that it is not necessary to release the allocation on the output buffer 450 and/or the backup buffer 430.

In operation 1850, the electronic device 101 may perform operation 1860, based on determining that it is necessary to release the allocation. In operation 1850, based on determining that it is not necessary to release the allocation, the electronic device 101 may terminate the operations according to FIG. 18.

In operation 1860, the electronic device 101 may release the allocation of a remaining buffer. In an embodiment, the electronic device 101 may release the allocation on a remaining buffer exceeding the second size among the buffers allocated to the output buffer 450. In an embodiment, the electronic device 101 may release the allocation on a remaining buffer exceeding the fourth size among the buffers allocated to the backup buffer 430. In an embodiment, the remaining buffer of the output buffer 450 may be a buffer exceeding the second size among the buffers allocated to the output buffer 450. In an embodiment, the remaining buffer of the backup buffer 430 may be a buffer exceeding the fourth size among the buffers allocated to the backup buffer 430.

In operation 1870, the electronic device 101 may determine whether switching from the backup buffer 430 to the output buffer 450 is necessary. For example, when an increase in the size of the output buffer 450 is required and a decrease in the size of the backup buffer 430 is required, the electronic device 101 may determine that switching from the backup buffer 430 to the output buffer 450 is required. For example, when it is required to reduce the size of the output buffer 450 and to increase the size of the backup buffer 430, the electronic device 101 may then determine that the switching from the backup buffer 430 to the output buffer 450 is not required.

In operation 1870, based on determining that the switching from the backup buffer 430 to the output buffer 450 is necessary, the electronic device 101 may perform operation 1880. In operation 1870, based on determining that no switching from the backup buffer 430 to the output buffer 450 is necessary (or determining that switching from the output buffer 450 to the backup buffer 430 is necessary), the electronic device 101 may perform operation 1890.

In operation 1880, the electronic device 101 may switch a portion of the backup buffer 430 to the output buffer 450. In an embodiment, the electronic device 101 may allocate to the output buffer 450 a portion of the size allocated to the backup buffer 430 exceeding the fourth size. For example, the electronic device 101 may switch to the output buffer 450 a portion of the backup buffer 430 in a remaining buffer exceeding the fourth size in the size allocated to the backup buffer 430.

In an embodiment, the electronic device 101 may perform operation 1830 after operation 1880. For example, in operation 1830, when there still exists a remaining buffer in the backup buffer 430 (or when the size allocated to the backup buffer 430 exceeds the fourth size), the electronic device 101 may determine to perform operation 1850. For example, in operation 1830, when additional buffer allocation is further required to the output buffer 450, the electronic device 101 may determine to perform operation 1840.

In operation 1890, the electronic device 101 may switch a portion of the output buffer 450 to the backup buffer 430. In an embodiment, the electronic device 101 may allocate to the backup buffer 430 a portion of the size allocated to the output buffer 450 exceeding the second size. For example, the electronic device 101 may switch a portion of the output buffer 450 into the backup buffer 430 in a remaining buffer exceeding the second size in the size allocated to the output buffer 450.

In an embodiment, the electronic device 101 may perform operation 1830 after operation 1880. For example, in operation 1830, when there still exists a remaining buffer in the output buffer 450 (or when the size allocated to the output buffer 450 exceeds the second size), the electronic device 101 may determine to perform operation 1850. For example, in operation 1830, when additional buffer allocation is further required to the backup buffer 430, the electronic device 101 may determine to perform operation 1840.

FIG. 19 illustrates a block diagram about an example of a functional configuration of an electronic device 101 in a network environment 100 according to one or more embodiments.

Referring to FIG. 19, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. In some embodiments, the artificial intelligence model may include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to one or more embodiments, the antenna module 197 may form a mmWave antenna module. According to an embodiment, the mmWave antenna module may include a printed circuit board, a RFIC disposed on a first surface (e.g., a bottom surface) of the printed circuit board, or adjacent to the first surface and capable of supporting a designated high-frequency band (e.g., the mmWave band), and a plurality of antennas (e.g., array antennas) disposed on a second surface (e.g., a top surface or a side portion) of the printed circuit board, or adjacent to the second surface and capable of transmitting or receiving signals of the designated high-frequency band.

At least some of the above-described components may be coupled to each other and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

As described above, an electronic device 101 may include a display. The electronic device 101 may include at least one processor 120 comprising processing circuitry. The electronic device 101 may include memory 130 including one or more storage mediums storing a decoder 330, a post-processing module 350, a renderer 360, and instructions. The decoder 330 may decode a frame stored in an input buffer 410 among a plurality of frames of a video. The post-processing module 350 may post-process the decoded frame. The renderer 360 may render the frame stored in an output buffer 450. The frame stored in the output buffer 450 may be the decoded frame or the post-processed frame. The instructions may, when executed by the at least one processor 120 individually or collectively, cause the electronic device 101 to set the output buffer 450 based on a time required for the post-processing. The instructions may, when executed by the at least one processor 120 individually or collectively, cause the electronic device 101 to adjust a speed of inputting the plurality of frames into the input buffer 410 based on a speed at which the rendered frame is played via the display 260.

The instructions may, when executed by the at least one processor 120 individually or collectively, cause the electronic device 101 to obtain input requesting the post-processing. The instructions may, when executed by the at least one processor 120 individually or collectively, cause the electronic device 101 to, based on the input, identify a generation time for generating the post-processed frame. The instructions may, when executed by the at least one processor 120 individually or collectively, cause the electronic device 101 to, based on the generation time, determine whether to cease playing the rendered frame via the display 260. The instructions may, when executed by the at least one processor 120 individually or collectively, cause the electronic device 101 to, based on a determination to cease the playing, set the post-processing while playing the video is ceased. The instructions may, when executed by the at least one processor 120 individually or collectively, cause the electronic device 101 to, based on a determination not to cease the playing, set the post-processing while the video is being played.

The instructions may, when executed by the at least one processor 120 individually or collectively, cause the electronic device 101 to, based on the input, search for a frame to be post-processed. The instructions may, when executed by the at least one processor 120 individually or collectively, cause the electronic device 101 to compare a reference time and the generation time including time for decoding the searched frame and time for setting the post-processing. The instructions may, when executed by the at least one processor 120 individually or collectively, cause the electronic device 101 to, based on that the generation time is less than the reference time, determine to cease the playing. The instructions may, when executed by the at least one processor 120 individually or collectively, cause the electronic device 101 to, based on that the generation time is equal to or greater than the reference time, determine not to cease the playing.

The instructions may, when executed by the at least one processor 120 individually or collectively, cause the electronic device 101 to, in case that the generation time is greater than or equal to the reference time and a reference timestamp is not set, determine not to cease the playing. The instructions may, when executed by the at least one processor 120 individually or collectively, cause the electronic device 101 to, in case that the generation time is equal to or greater than the reference time and the reference timestamp is set, determine whether to cease playing the rendered frame, based on comparing the reference timestamp and a timestamp difference between the frame for which post-processing is requested and the earliest frame for which the post-processing is possible.

The instructions may, when executed by the at least one processor 120 individually or collectively, cause the electronic device 101 to, based on the input, search for a frame for which the post-processing is requested. The instructions may, when executed by the at least one processor 120 individually or collectively, cause the electronic device 101 to identify the earliest frame that is able to be post-processed by setting the post-processing. The instructions may, when executed by the at least one processor 120 individually or collectively, cause the electronic device 101 to identify a timestamp difference between the frame for which the post-processing is requested and the earliest frame that is able to be post-processed. The instructions may, when executed by the at least one processor 120 individually or collectively, cause the electronic device 101 to compare the identified timestamp and a reference timestamp. The instructions may, when executed by the at least one processor 120 individually or collectively, cause the electronic device 101 to, based on that the identified timestamp is equal to or more than the reference timestamp, determine not to cease the playing. The instructions may, when executed by the at least one processor 120 individually or collectively, cause the electronic device 101 to, based on that the identified timestamp is less than the reference timestamp, determine to cease the playing.

The instructions may, when executed by the at least one processor 120 individually or collectively, cause the electronic device 101 to, in case that the identified timestamp is less than the reference timestamp and the reference time is not set, determine not to cease the playing. The instructions may, when executed by the at least one processor 120 individually or collectively, cause the electronic device 101 to, in case that the identified timestamp is less than the reference timestamp and the reference time is set, determine whether to cease playing the rendered frame, based on comparing the reference time and the generation time including the time for decoding the searched frame and the time for setting the post-processing.

The instructions may, when executed by the at least one processor 120 individually or collectively, cause the electronic device 101 to set a backup buffer 430 in which the frame decoded by the decoder 330 are stored and which is accessed by the post-processing module 350. The instructions may, when executed by the at least one processor 120 individually or collectively, cause the electronic device 101 to generate, by the post-processing module 350, the post-processed frame based on one or more decoded frames stored in the backup buffer 430.

A size of the backup buffer 430 may correspond to the number of one or more decoded frames required according to a post-processing function provided by the post-processing module 350.

The instructions may, when executed by the at least one processor 120 individually or collectively, cause the electronic device 101 to obtain an input requesting release of the post-processing. The instructions may, when executed by the at least one processor 120 individually or collectively, cause the electronic device 101 to, based on the input, store one or more decoded frames stored in the backup buffer 430 in the output buffer 450. The instructions may, when executed by the at least one processor 120 individually or collectively, cause the electronic device 101 to render, by the renderer 360, one or more decoded frames from the backup buffer 430 to the output buffer 450.

The memory may include another post-processing module 350 that further post-processes the post-processed frames. The instructions may, when executed by the at least one processor 120 individually or collectively, cause the electronic device 101 to set another backup buffer 430 in which frames post-processed by the post-processing module 350 are stored and which is accessed by the another post-processing module 350. The post-processed frame may be stored in the another backup buffer 430, while the another post-processing module 350 is activated. The post-processed frame may be stored in the output buffer 450, while the another post-processing module 350 is deactivated.

As described above, a method may be performed by an electronic device including memory 130 including one or more storage mediums storing a decoder 330, a post-processing module 350, and a renderer 360. The method may include, by the decoder 330, decoding a frame stored in an input buffer 410 among a plurality of frames of a video. The method may include, by the post-processing module 350, post-processing the decoded frame. The method may include, by the renderer 360, rendering the frame stored in an output buffer. The frame stored in the output buffer 450 may be the decoded frame or the post-processed frame. The output buffer 450 may be set based on a time required for setting of the post-processing. A speed of inputting the plurality of frames into the input buffer 410 may be adjusted based on a speed at which the rendered frame is played via a display 260.

The method may include obtaining input requesting the post-processing. The method may include, based on the input, identifying a generation time for generating the post-processed frame. The method may include, based on the generation time, determining whether to cease playing the rendered frame via the display 260. The method may include, based on a determination to cease the playing, setting the post-processing while playing the video is ceased. The method may include, based on a determination not to cease the playing, setting the post-processing while the video is being played.

The method may include, based on the input, searching for a frame to be post-processed. The method may include comparing the generation time including a time for decoding the searched frame and a time for setting the post-processing and a reference time. The method may include, based on that the generation time is less than the reference time, determining to cease the playing. The method may include, based on that the generation time is equal to or greater than the reference time, determining not to cease the playing.

The method may include, in case that the generation time is greater than or equal to the reference time and a reference timestamp is not set, determining not to cease the playing. The method may include, in case that the generation time is equal to or greater than the reference time and the reference timestamp is set, determining whether to cease playing the rendered frame, based on comparing the reference timestamp and a timestamp difference between the frame for which post-processing is requested and the earliest frame for which the post-processing is possible.

The method may include, based on the input, searching for a frame for which the post-processing is requested. The method may include identifying the earliest frame that is able to be post-processed by setting the post-processing. The method may include identifying a timestamp difference between the frame for which the post-processing is requested and the earliest frame that is able to be post-processed. The method may include comparing the identified timestamp and a reference timestamp. The method may include, based on that the identified timestamp is equal to or greater than the reference timestamp, determining to cease the playing. The method may include, based on that the identified timestamp is less than the reference timestamp, determining not to cease the playing.

The method may include, in case that the identified timestamp is less than the reference timestamp and the reference time is not set, determining not to cease the playing. The method may include, in case that the identified timestamp is less than the reference timestamp and the reference time is set, determining whether to cease playing the rendered frame, based on comparing the reference time and the generation time including the time for decoding the searched frame and the time for setting the post-processing.

The method may include setting a backup buffer 430 in which the frame decoded by the decoder 330 are stored and which is accessed by the post-processing module 350. The method may include generating, by the post-processing module 350, the post-processed frame based on one or more decoded frames stored in the backup buffer 430.

A size of the backup buffer may correspond to the number of one or more decoded frames required according to a post-processing function provided by the post-processing module.

The method may include obtaining an input requesting release of the post-processing. The method may include, based on the input, storing one or more decoded frames stored in the backup buffer 430 into the output buffer 450. The method may include rendering, by the renderer 360, one or more decoded frames from the backup buffer 430 to the output buffer 450.

The memory 130 may include another post-processing module 350 that further post-processes the post-processed frames. Another backup buffer 430 may be set in the memory 130, in which frames post-processed by the post-processing module 350 may be stored, the another backup buffer 430 being accessed by the another post-processing module 350. The post-processed frame may be stored in the another backup buffer 430, while the another post-processing module 350 is activated. The post-processed frame may be stored in the output buffer 450 while the another post-processing module 350 is deactivated.

As described above, a non-transitory computer readable storage medium may store a program including a decoder 330, a post-processing module 350, a renderer 360, and instructions. The decoder 330 may decode a frame stored in an input buffer 410 among a plurality of frames of a video. The post-processing module 350 may post-process the decoded frame. The renderer 360 may render the frame stored in an output buffer 450. The frame stored in the output buffer 450 may be the decoded frame or the post-processed frame. The instructions may, when executed by the at least one processor 120 individually or collectively, cause the electronic device 101 to set the output buffer 450 based on a time required for setting the post-processing. The instructions may, when executed by the at least one processor 120 individually or collectively, cause the electronic device 101 to adjust a speed of inputting the plurality of frames into the input buffer 410, based on a speed at which the rendered frame is played via the display 260

The electronic device according to one or more embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that one or more embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

One or more embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to one or more embodiments, each component (e.g., a module or a program) of the above-described components may include a single entity or multiple entities, and some of the multiple entities may be separately disposed in different components. According to one or more embodiments of the disclosure, one or more of the above-described components may be omitted, or one or more other components may be added. In some embodiments, a plurality of components (e.g., modules or programs) may be integrated into a single component. In such a case, according to one or more embodiments of the disclosure, the integrated component may still perform one or more functions of each of the plurality of components in the same or similar manner as they are performed by a corresponding one of the plurality of components before the integration. According to one or more embodiments of the disclosure, operations performed by the module, the program, or another component may be carried out sequentially, in parallel, repeatedly, or heuristically, or one or more of the operations may be executed in a different order or omitted, or one or more other operations may be added.

The embodiments may be described and illustrated in terms of blocks, as shown in the drawings, which carry out a described function or functions. These blocks, which may be referred to herein as the demultiplexer 15 to the post-processing memory 30 of FIG. 1, the processor 120 to the renderer 360 of FIG. 3, and other similar blocks of other drawings, may be physically implemented by analog and/or digital circuits including one or more of a logic gate, an integrated circuit, a microprocessor, a microcontroller, a memory circuit, a passive electronic component, an active electronic component, an optical component, and the like, and may also be implemented by or driven by software and/or firmware (configured to perform the functions or operations described herein). The circuits may, for example, be embodied in one or more semiconductor chips, or on substrate supports such as printed circuit boards and the like. Circuits included in a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks. Likewise, the blocks of the embodiments may be physically combined into more complex blocks.

## Claims

1. An electronic device (101) comprising:

   a display (260),
   at least one processor (120) comprising processing circuitry; and
   memory (130), comprising one or more storage mediums, a decoder (330), a post-processing module (350), a renderer (360), the memory (130) being configured to store instructions,
   wherein the decoder (330) is configured to decode a frame among a plurality of frames of a video stored in an input buffer (410), and to generate a decoded frame,
   wherein the post-processing module (350) is configured to post-processes the decoded frame, and to generate a post-processed frame,
   wherein the renderer (360) is configured to render the decoded frame or the post-processed frame stored in an output buffer (450),
   wherein the instructions, when executed by the at least one processor (120) individually or collectively, cause the electronic device (101) to:

   set the output buffer (450) based on time required for a post-processing, and
   adjust a speed of inputting the plurality of frames into the input buffer (410) based on a speed at which the rendered frame is played via the display (260).

2. The electronic device (101) of claim 1, wherein the instructions, when executed by the at least one processor (120) individually or collectively, cause the electronic device (101) to:

>    obtain an input requesting for the post-processing,
>    based on the input, identify generation time for generating the post-processed frame,
>    based on the generation time, determine whether to cease playing the rendered frame via the display (260),
>    based on a determination to cease the playing, set the post-processing when playing the video is ceased, and
>    based on a determination not to cease the playing, set the post-processing when the video is played.

3. The electronic device (101) of claim 2, wherein the instructions, when executed by the at least one processor (120) individually or collectively, further cause the electronic device (101) to:

>    based on the input, search for a frame to be post-processed,
>    compare a reference time and the generation time including time for decoding the searched frame and time for setting the post-processing,
>    based on the generation time that is less than the reference time, cease the playing, and
>    based on the generation time that is equal to or greater than the reference time, continue playing the video.

4. The electronic device (101) of claim 3, wherein the instructions, when executed by the at least one processor (120) individually or collectively, further cause the electronic device (101) to:

>    when the generation time is greater than or equal to the reference time and a reference timestamp is not set, continue playing the video, and
>    when the generation time is equal to or greater than the reference time and the reference timestamp is set, determine whether to cease playing the rendered frame, based on comparing the reference timestamp and a timestamp difference between the frame for which post-processing is requested and the earliest frame for which the post-processing is possible.

5. The electronic device (101) of claim 2, wherein the instructions, when executed by the at least one processor (120) individually or collectively, further cause the electronic device (101) to:

>    based on the input, search for a frame for which the post-processing is requested,
>    identify the earliest frame that is able to be post-processed by setting the post-processing,
>    identify a timestamp difference between the frame for which the post-processing is requested and the earliest frame that is able to be post-processed,
>    compare the identified timestamp and a reference timestamp,
>    based on that the identified timestamp is less than the reference timestamp, continue playing the video, and
>    based on that the identified timestamp is equal to or greater than the reference timestamp, cease playing the video.

6. The electronic device (101) of claim 5, wherein the instructions, when executed by the at least one processor (120) individually or collectively, further cause the electronic device (101) to:

>    when the identified timestamp is less than the reference timestamp and the reference time is not set, continue playing the video, and
>    when the identified timestamp is less than the reference timestamp and the reference time is set, determine whether to cease playing the rendered frame, based on comparing that the reference time and the generation time including the time for decoding the searched frame and the time for setting the post-processing.

7. The electronic device (101) of claim 1, wherein the instructions, when executed by the at least one processor (120) individually or collectively, further cause the electronic device (101) to:

>    set a backup buffer (430) where the frame decoded by the decoder (330) are stored and that is accessed by the post-processing module (350), and
>    generate, by the post-processing module (350), the post-processed frame based on one or more decoded frames stored in the backup buffer (430).

8. The electronic device (101) of claim 7, wherein a size of the backup buffer (430) corresponds to a number of one or more decoded frames required according to a post-processing function provided by the post-processing module (350).

9. The electronic device (101) of claim 7, wherein the instructions, when executed by the at least one processor (120) individually or collectively, further cause the electronic device (101) to:

obtain an input requesting for release of the post-processing,

based on the input, store the one or more decoded frames stored in the backup buffer (430) into the output buffer (450), and

render, by the renderer (360), one or more decoded frames from the backup buffer (430) to the output buffer (450).

10. The electronic device (101) of claim 7, wherein the memory (130) comprises another post-processing module (350) that further post-processes the post-processed frames,

wherein the instructions, when executed by the at least one processor (120) individually or collectively, further cause the electronic device (101) to set another backup buffer (430) where frames post-processed by the post-processing module (350) are stored and that is accessed by the another post-processing module (350), and

wherein the post-processed frame is stored in the another backup buffer (430) when the another post-processing module (350) is activated, and

wherein the post-processed frame is stored in the output buffer (450) when the another post-processing module (350) is deactivated.

11. A method of an electronic device (101) including memory (130) comprising one or more storage mediums, a decoder (330), a post-processing module (350), and a renderer (360), the method comprising:

by the decoder (330), decoding a frame stored in an input buffer (410) among a plurality of frames of a video and generating a decoded frame,

by the post-processing module (350), post-processing the decoded frame, and generating a post-processed frame, and

by the renderer (360), rendering the decoded frame or the post-processed frame stored in an output buffer (450),

wherein the output buffer (450) is set based on time required for a post-processing, and

wherein a speed of inputting the plurality of frames into the input buffer (410) is adjusted based on a speed at which the rendered frame is played via the display (260).

12. The method of claim 11, comprising:

obtaining an input requesting for the post-processing,

based on the input, identifying generation time for generating the post-processed frame,

based on the generation time, determining whether to cease playing the rendered frame via the display (260),

based on a determination to cease the playing, setting the post-processing when playing the video is ceased, and

based on a determination not to cease the playing, setting the post-processing when the video is played.

13. The method of claim 12, comprising:

based on the input, searching for a frame to be post-processed,

comparing a reference time and the generation time including time for decoding the searched frame and time for setting the post-processing, based on the generation time being less than the reference time, ceasing playing the video, and based on the generation time being equal to or greater than the reference time, continuing playing the video.

14. The method of claim 13, comprising:

when the generation time is greater than or equal to the reference time and a reference timestamp is not set, continuing playing the video, and

when the generation time is equal to or greater than the reference time and the reference timestamp is set, determining whether to cease playing the rendered frame, based on comparing the reference timestamp and a timestamp difference between the frame for which post-processing is requested and the earliest frame for which the post-processing is possible.

15. The method of claim 12, comprising:

based on the input, searching for a frame for which the post-processing is requested, identifying the earliest frame that is able to be post-processed by setting the post-processing, identifying a timestamp difference between the frame for which the post-processing is requested and the earliest frame that is able to be post-processed,

comparing the identified timestamp and a reference timestamp,

when the identified timestamp is less than the reference timestamp, continuing playing the video, and

when the identified timestamp is equal to or greater than the reference timestamp, ceasing playing the video.

| DEMULTIPLEXER (15) | → | INPUT BUFFER (20) | → | DECODER (25) | → | OUTPUT BUFFER (35) | → | RENDERER (40) |

POST-PROCESSING MODULE (30)

FIG. 1

FIG. 2A

FIG. 2B

<u>101</u>

FIG. 3

FIG. 4

FIG. 5A

FIG. 5B

FIG. 6A

FIG. 6B

FIG. 7

EP 4 746 424 A1

INPUT BUFFER (410) → DECODER (330)

POST-PROCESSING MODULE (350)
BACKUP BUFFER (430)

POST-PROCESSING MODULE (810)
BACKUP BUFFER (811)

POST-PROCESSING MODULE (820)
BACKUP BUFFER (821)

OUTPUT BUFFER (450) → RENDERER (360)

455

415

435

815

825

FIG. 8A

RENDERER (360)

OUTPUT BUFFER (450)

455

POST-PROCESSING MODULE (820)

BACKUP BUFFER (821)

825

POST-PROCESSING MODULE (810)

BACKUP BUFFER (811)

815

850

DECODER (330)

POST-PROCESSING MODULE (350)

BACKUP BUFFER (430)

435

INPUT BUFFER (410)

415

FIG. 8B

910

IDENTIFY INPUT RELATED TO
POST-PROCESSING

920

NO ◄── PAUSE?

YES

930

PERFORM POST-PROCESSING
WITHOUT PAUSING

940

PERFORM POST-PROCESSING WHILE PAUSING

FIG. 9

910

IDENTIFY INPUT RELATED TO
POST-PROCESSING

1010

IDENTIFY SEEK TIME

1020

SEEK REQUIRED
TIME IS LESS THAN REFERENCE
SEEK TIME?

NO

YES

930

PERFORM POST-PROCESSING
WITHOUT PAUSING

940

PERFORM POST-PROCESSING WHILE PAUSING

FIG. 10

```
                                           ⌒910
        ┌──────────────────────────────┐
        │   IDENTIFY INPUT RELATED TO   │
        │        POST-PROCESSING        │
        └──────────────────────────────┘
                       │
                       ▼                   ⌒1110
        ┌──────────────────────────────┐
        │   IDENTIFY TIMESTAMP DIFFERENCE  │
        └──────────────────────────────┘
                       │
                       ▼
                                      1120
                    ◇ TIMESTAMP
         NO    ◇  DIFFERENCE IS GREATER THAN  ◇
        ◀──────◇ OR EQUAL TO REFERENCE TIMESTAMP
                    ◇   DIFFERENCE?   ◇
                       │
                      YES
```

TIMESTAMP DIFFERENCE IS GREATER THAN OR EQUAL TO REFERENCE TIMESTAMP DIFFERENCE?

|  ⌒930 | ⌒940 |
|---|---|
| PERFORM POST-PROCESSING WITHOUT PAUSING | PERFORM POST-PROCESSING WHILE PAUSING |

FIG. 11

910 ~

IDENTIFY INPUT RELATED TO
POST-PROCESSING

1210 ~

IDENTIFY BACKUP BUFFER

1220

BACKUP BUFFER IS AVAILABLE?

NO

YES

1230 ~

PERFORM POST-PROCESSING
WITHOUT BACKUP BUFFER

1240 ~

PERFORM POST-PROCESSING USING
BACKUP BUFFER

FIG. 12

910

IDENTIFY INPUT RELATED
TO POST-PROCESSING

1310

REFERENCE SEEK
TIME IS SET?

NO

YES

1340

REFERENCE
TIMESTAMP DIFFERENCE
IS SET?

NO

1320

SEEK REQUIRED
TIME IS LESS THAN REFERENCE
SEEK TIME?

NO

YES

1360

PERFORM POST-
PROCESSING WITHOUT
PAUSING

YES

1350

IDENTIFY POST-PROCESSING
APPLIED FRAME BASED ON REFERENCE
TIMESTAMP DIFFERENCE

1330

IDENTIFY POST-
PROCESSING APPLIED FRAME
BASED ON SEEK TIME

FIG. 13

IDENTIFY INPUT RELATED
TO POST-PROCESSING
910

REFERENCE
TIMESTAMP DIFFERENCE
IS SET?
1410

NO

YES

TIMESTAMP
DIFFERENCE IS GREATER
THAN OR EQUAL TO LESS THAN
REFERENCE TIMESTAMP
DIFFERENCE?
1420

NO

REFERENCE SEEK
TIME IS SET?
1440

NO

YES

YES

PERFORM POST-
PROCESSING WITHOUT
PAUSING
1360

IDENTIFY POST-
PROCESSING APPLIED FRAME
BASED ON SEEK TIME
1330

IDENTIFY POST-PROCESSING
APPLIED FRAME BASED ON REFERENCE
TIMESTAMP DIFFERENCE
1350

FIG. 14

FIG. 15

~ 1610

PREPARE POST-PROCESSING

~ 1620

PERFORM POST-PROCESSING

FIG. 16

1710

SET SIZE OF OUTPUT BUFFER

1720

SET SIZE OF BACKUP BUFFER

1730

BUFFER SIZE IS TO BE ADJUSTED?

NO

YES

1740

ADJUST BUFFER SIZE

FIG. 17

FIG. 18

1900

ELECTRONIC DEVICE 1901

| INPUT MODULE 1950 | | MEMORY 1930 |
| SOUND OUTPUT MODULE 1955 | DISPLAY MODULE 1960 | VOLATILE MEMORY 1932 |

PROGRAM 1940

APPLICATION 1946

MIDDLEWARE 1944

OPERATING SYSTEM 1942

MEMORY 1930

VOLATILE MEMORY 1932

NON-VOLATILE MEMORY 1934

INTERNAL MEMORY 1936

EXTERNAL MEMORY 1938

BATTERY 1989

PROCESSOR 1920

MAIN PROCESSOR 1921

AUXILIARY PROCESSOR 1923

POWER MANAGE-MENT MODULE 1988

COMMUNICATION MODULE 1990

WIRELESS COMMUNICATION MODULE 1992

WIRED COMMUNICATION MODULE 1994

SUBSCRIBER IDENTIFICATION MODULE 1996

ANTENNA MODULE 1997

AUDIO MODULE 1970

SENSOR MODULE 1976

INTERFACE 1977

CONNECTING TERMINAL 1978

HAPTIC MODULE 1979

CAMERA MODULE 1980

SECOND NETWORK 1999

ELECTRONIC DEVICE 1904

FIRST NETWORK 1998

ELECTRONIC DEVICE 1902

SERVER 1908

FIG. 19

## INTERNATIONAL SEARCH REPORT

| International application No. |
| --- |
| **PCT/KR2024/014542** |

| **A.** | **CLASSIFICATION OF SUBJECT MATTER** |
| --- | --- |

**H04N 21/431**(2011.01)i; **H04N 21/44**(2011.01)i; **H04N 21/472**(2011.01)i; **H04N 21/8547**(2011.01)i; **H04N 21/426**(2011.01)i

According to International Patent Classification (IPC) or to both national classification and IPC

| **B.** | **FIELDS SEARCHED** |
| --- | --- |

Minimum documentation searched (classification system followed by classification symbols)

H04N 21/431(2011.01); G06F 15/16(2006.01); G06F 9/46(2006.01); G06T 1/00(2006.01); H04N 13/122(2018.01); H04N 13/161(2018.01); H04N 5/76(2006.01); H04N 5/937(2006.01); H04N 7/26(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 영상(image), 프레임(frame), 후처리(post-processing), 버퍼(buffer), 속도(speed)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| A | JP 2010-141632 A (HITACHI LTD.) 24 June 2010 (2010-06-24)<br>See paragraphs [0065]-[0072]; claims 1-8; and figure 9. | 1-15 |
| A | KR 10-2460474 B1 (IMMERSIVECAST CO., LTD.) 01 November 2022 (2022-11-01)<br>See paragraphs [0059]-[0062]; and figures 4-5. | 1-15 |
| A | JP 2011-259408 A (PANASONIC CORP.) 22 December 2011 (2011-12-22)<br>See claims 1-7. | 1-15 |
| A | US 2012-0092353 A1 (PALTASHEV, Timour et al.) 19 April 2012 (2012-04-19)<br>See paragraphs [0032]-[0035]; claims 1-2; and figure 4. | 1-15 |
| A | US 7586492 B2 (RIACH, Duncan A. et al.) 08 September 2009 (2009-09-08)<br>See claims 1-3. | 1-15 |

| ☐ Further documents are listed in the continuation of Box C. | ☑ See patent family annex. |
| --- | --- |

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 January 2025** | **09 January 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/014542**

| Patent document cited in search report | | | Publication date (day/month/year) | Patent family member(s) | | | Publication date (day/month/year) |
|---|---|---|---|---|---|---|---|
| JP | 2010-141632 | A | 24 June 2010 | CN | 101753942 | A | 23 June 2010 |
| | | | | US | 2010-0150519 | A1 | 17 June 2010 |
| KR | 10-2460474 | B1 | 01 November 2022 | | None | | |
| JP | 2011-259408 | A | 22 December 2011 | JP | 5879555 | B2 | 08 March 2016 |
| | | | | US | 2011-0274160 | A1 | 10 November 2011 |
| | | | | US | 9510003 | B2 | 29 November 2016 |
| US | 2012-0092353 | A1 | 19 April 2012 | CN | 102254297 | A | 23 November 2011 |
| | | | | CN | 102254297 | B | 27 November 2013 |
| | | | | EP | 2635978 | A2 | 11 September 2013 |
| | | | | JP | 2013-543190 | A | 28 November 2013 |
| | | | | JP | 5898685 | B2 | 06 April 2016 |
| | | | | KR | 10-1805959 | B1 | 07 December 2017 |
| | | | | KR | 10-2014-0003419 | A | 09 January 2014 |
| | | | | US | 8681162 | B2 | 25 March 2014 |
| | | | | WO | 2012-061102 | A2 | 10 May 2012 |
| | | | | WO | 2012-061102 | A3 | 19 July 2012 |
| US | 7586492 | B2 | 08 September 2009 | CN | 101080698 | A | 28 November 2007 |
| | | | | CN | 101080698 | B | 11 August 2010 |
| | | | | JP | 2008-524720 | A | 10 July 2008 |
| | | | | JP | 4620129 | B2 | 26 January 2011 |
| | | | | KR | 10-0902973 | B1 | 15 June 2009 |
| | | | | KR | 10-2007-0091356 | A | 10 September 2007 |
| | | | | KR | 10-2009-0045349 | A | 07 May 2009 |
| | | | | US | 2006-0132491 | A1 | 22 June 2006 |
| | | | | WO | 2006-068985 | A2 | 29 June 2006 |
| | | | | WO | 2006-068985 | A3 | 11 January 2007 |

Form PCT/ISA/210 (patent family annex) (July 2022)